(19) Europäisches Patentamt / European Patent Office / Office européen des brevets

(11) EP 2 320 744 B1

(12) EUROPEAN PATENT SPECIFICATION

(45) Date of publication and mention
of the grant of the patent:
04.01.2017 Bulletin 2017/01

(51) Int Cl.:
*A23L 19/00* (2016.01)     *A23B 7/154* (2006.01)

(21) Application number: 09776246.2

(22) Date of filing: 15.07.2009

(86) International application number:
PCT/DK2009/050180

(87) International publication number:
WO 2010/006621 (21.01.2010 Gazette 2010/03)

(54) **PROCESSES FOR MANUFACTURE OF PRODUCTS FROM PLANTS**

VERFAHREN FÜR DIE HERSTELLUNG VON PRODUKTEN AUS PFLANZEN

PROCÉDÉS DE FABRICATION DE PRODUITS ISSUS DE VÉGÉTAUX

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 18.07.2008 DK 200801021
15.04.2009 DK 200900487
28.04.2009 DK 200900548

(43) Date of publication of application:
18.05.2011 Bulletin 2011/20

(73) Proprietor: Københavns Universitet
1165 Copenhagen K (DK)

(72) Inventors:
• ANDERSEN, Keld Ejdrup
DK-4300 Holbæk (DK)
• SØRENSEN, Jens Christian
DK-2660 Brøndby Strand (DK)
• SØRENSEN, Hilmer
DK-2660 Brøndby Strand (DK)
• MØLLER, Peter
DK-4230 Skælskør (DK)
• MORTENSEN, Kirsten
DK-4000 Roskilde (DK)

(74) Representative: Awapatent A/S
Rigensgade 11
1316 Copenhagen K (DK)

(56) References cited:
EP-A1- 1 920 662     US-A- 5 912 034

• SAPERS G M ET AL: "heated ascorbic/citric acid solution as browning inhibitor for pre-peeled potatoes" JOURNAL OF FOOD SCIENCE, WILEY-BLACKWELL PUBLISHING, INC, US, vol. 60, no. 4, 1 January 1995 (1995-01-01), pages 762-766, XP002094913 ISSN: 0022-1147
• VAN KONINGSVELD G A ET AL: "Effects of Ethanol on Structure and Solubility of Potato Proteins and the effects of Its Presence during the Preparation of a Protein Isolate" INTERNET CITATION 4 May 2002 (2002-05-04), pages 2947-2956, XP002534084 ISSN: 0021-8561 Retrieved from the Internet: URL:http://pubs.acs.org/doi/pdf/10.1021/jf 011202x> [retrieved on 2009-06-25]
• KNORR D ET AL: "POTATO PROTEIN CONCENTRATES: THE INFLUENCE OF VARIOUS METHODS OF RECOVERY UPON YIELD, COMPOSITIONAL AND FUNCTIONAL CHARACTERISTICS" JOURNAL OF FOOD PROCESSING AND PRESERVATION, TRUMBULL, CT, US, [Online] vol. 1, 1 January 1977 (1977-01-01), pages 235-247, XP002534083 Retrieved from the Internet: URL:http://www3.interscience.wiley.com/cgi -bin/fulltext/119630862/PDFSTAR T?CRETRY=1&SRETRY=0> [retrieved on 2009-06-25]

## Description

### Field of the invention

The present invention relates to a process for inhibiting browning of plant products. This process comprises the steps of providing a plant material; disrupting the plant material; adding a chelating agent to the disrupted plant material to a concentration of 1-200 mM in the liquid fraction; and adjusting the pH of the plant material to a value of from about 2.0 to about 4.5. The present invention also relates to processes for the manufacture of a soluble product, a soluble component, an insoluble product, and an insoluble component. The invention also relates to products obtainable in these processes.

### Background of the invention

Discolouration of plant products is a problem occurring in the industrial processing of many plants. Such discolouration may lead to a deterioration of the quality of the processed product and also to a lower yield than could have been obtained if the occurrence of discolouration were prevented. Both these effects of the discolouration lead to losses within the field of plant processing. Problems related to discolouration may be particularly pronounced for potatoes, however the problems apply equally well in the processing of other crops such as e.g. corn, pulses (such as e.g. various peas and beans), yams, manioc, sweet potato, sugar beet, sugar cane, cereals such as e.g. wheat, oat, and barley, etc. and fruits.

One type of discolouration is known as fruit browning, and fruit browning appears to be a common process occurring in most crops and other plants, primarily due to the presence of plant polyphenol oxidases (PPOs) and phenolic compounds in all plant types. Enzymatic browning of fruits and vegetables thus creates heavy economic losses.

Discolouration may also occur in a non-enzymatic process. Non-enzymatic browning is a chemical process that produces a brown colour in foods without the activity of enzymes. In some cases non-enzymatic browning may be desirable (in connection with e.g. caramelisation processes, fermenting of tea, etc.) but in many other cases it is undesirable.

Plant material, such as fresh potato juice, other fruit juices, fruit flesh, etc., is a complex mixture of soluble and insoluble material comprising proteins, carbohydrates, such as starch, pectin, cellulose and hemicellulose, minerals and other organic components, such glycoalkaloides, alkaloids, flavour components, simple organic acids, etc., and monomeric and polymeric reactive phenols. The oxidation of natural phenolic compounds in fruit or vegetable juice, especially potato juice, causes them to turn brown or black, thereby resulting in browning of the fruit. Chemically, the phenolic compounds are oxidised into quinones, which rapidly combine into a dark polymer residues. Fruit browning is mediated via enzymatic and non-enzymatic browning.

*Processing of plant material - exemplified by potatoes*

As an example of an industrially relevant crop, the currently employed processing of potatoes will now be discussed.

A major fraction of the potato harvest (in Denmark e.g.) is industrially processed in order to produce products such as French fries, potato chips/crisps, mashed potato products, hash browns, etc. One of the economically most significant industrial products derived from potatoes is potato starch.

Starch is a mixture of amylose and amylopectin. These are both complex carbohydrate polymers of glucose. Starch is used in cooking and in the food industry for thickening food products. In industry, it is e.g. used in the manufacturing of adhesives, paper, textiles and as a mould in the manufacture of sweets such as wine gums and jelly beans. It is a powder that is preferably white, flavourless and odourless. Flavoured and/or discoloured starch products may interfere in an undesired manner with various applications within e.g. the food industry.

Starch is often found in the fruit, seeds, rhizomes or tubers of plants. The major resources for starch production and consumption worldwide are rice, wheat, corn, pea, manioc, bamboo, tapioca, and potatoes.

A modified food starch may be subject to one or more chemical modifications that allow it to function properly under high heat and/or shear frequently encountered during food processing. Resistant starch is starch that escapes digestion in the small intestine of healthy individuals.

The juice of the potato tubers, as well as juices from other crops that are industrially processed such as e.g. sugar beet and sugar cane, is usually considered waste, which gives rise to environmental problems in the production of e.g. potato starch. One possible means of reducing this pollution problem is recovery of proteins, which can represent up to 250 g/kg of the soluble dry solids of potato juice. In the professional vocabulary the undiluted juice is called "fruit juice", whereas the diluted juice - that may optionally be heat treated in order to remove heat coagulated protein - is designated "fruit water". Both have a high content of organic materials which give rise to high oxygen demand (high BOD and COD) in waste water from e.g. the potato starch plants. The fruit water also contains phosphorous- and nitrogen-compounds which fertilise the recipients. Concentrating e.g. potato fruit water/fruit juice to be used as feed supplement by evaporation or reverse osmosis is used by some potato starch manufacturers.

Potato protein has traditionally thus been regarded as a waste product or a low value by product resulting from starch production. However, its nutritional qualities (i.e. protein efficiency ratio and biological value) have been shown to be greater than that of casein and comparable to that of whole egg. Potato protein is rich in lysine and theoretically an excellent supplement for lysine-poor proteins such as those of cereals. Native potato protein furthermore has a number of desirable properties, such as e.g. good foaming capacity, solubility in water, etc.

Despite its unique nutritional and functional qualities, potato protein is currently only used as animal feed or as an agricultural fertiliser, because the available protein products exhibit a number of serious drawbacks.

One of the major drawbacks is that the recovery of potato protein from the effluent of potato starch mills is commonly carried out on an industrial scale by heat coagulation. Prior attempts to isolate the proteins from the potato juice by milder methods, such as membrane filtration and precipitation tend to be inefficient in the industrial scale production environment.

Due to the presently applied heat coagulation processes, potato protein becomes heavily denatured and as a consequence becomes devoid of functional properties, i.e. emulsifying capacity, foaming capacity, thermo-gelling capacity, water binding capacity, etc. Even the most essential requirement for its application in the food industry, i.e. solubility in water, cannot be met by heat denatured potato proteins.

In fact, a number of problems is associated with isolation of potato starch and potato proteins on an industrial scale:

- Current methods tend to result in potato proteins with an undesired off-taste and -smell of potatoes. Products with an off-taste will have a limited applicability in e.g. the food industry.
- Methods for isolating starch and proteins, wherein sulphites and heat treatments are not employed or only partly employed, tend to result in discoloured products. Discoloured products likewise have a limited applicability in e.g. the food industry. Currently, bleaching is very often applied in potato starch production. Bleaching is relatively laborious and expensive and is often associated with environmental concerns.
- Glycoalkaloids are a family of poisons commonly found in the plant family *Solanaceae* (e.g. *S. dulcamara*) (nightshade) of which several are toxic. Potato glycoalkaloids are bitter tasting, and produce a burning irritation in the back of the mouth and side of the tongue when eaten, and they may be difficult to remove from potato starch and potato proteins.
- It has thus far been difficult to provide native potato proteins with the ability to compete with other plant protein products with regard to both price and quality.
- Many potentially valuable components resulting from processing of potatoes are currently discarded and may even cause environmental problems.

Even though industrially processed potato starch and protein often have an undesired potato flavour and odour, it is currently a major problem within the potato industry that processed potato products such as e.g. French fries, chips, potato crisps, mashed potato, powdered mashed potato (of e.g. the "just-add-water/milk" type), etc. often have little or no potato flavour. It follows that it is desirable in most cases that potato products for direct consumption have a natural potato flavour.

Other by-products from industrial processing of potatoes and other crops are soluble and insoluble fibres. Insoluble fibres are often relatively easily collected by e.g. gravity/sedimentation and are subsequently used as either fertiliser/soil conditioner or as animal feed ("pulp fraction"). The majority of these fibres are derived from cell wall material. However, these insoluble fibres could potentially become a valuable product for use in the food industry, provided that simple methods were provided enabling extraction of such fibres preferably with little or no discolouration and/or little or no flavour and odour. In addition to lack of discolouration, it is furthermore desirable to provide a product that is devoid or almost devoid of glycoalkaloides as well as colour precursors that may give rise to discolouration upon contact with e.g. plant material comprising active PPOs. Such fibre products could potentially have widespread applications within the food industry as an inexpensive additive with the ability to improve the nutritional and/or digestive qualities of food products and/or to function as a bulking agent and/or as a replacement for other constituents such as e.g. sugar, sugar alcohols, and/or fat.

In fact, it has recently been reported that insoluble fibres extracted from potato are surprisingly efficient in binding water. Up to about 10% potato fibres by weight may e.g. be added to food products comprising minced meets, thus providing improved nutritional and sensorial quality as well as reduced shrinkage upon cooking due to the excellent water binding qualities. It is thus more than likely that the provision of such fibres to various industries (food industries, pharmaceutical industries, etc.) may result in development of various products with improved functional properties.

Soluble fibres constitute yet another by-product from industrial potato processing. Currently, these fibres are normally a constituent of the potato water/juice and do thus form part of the environmental problems associated with the effluents from potato processing factories. Often, the effluents from these factories are stored in giant containers and subsequently used for watering and fertilising crops. However, effluents used for agricultural purposes are often associated with environmental risks. Furthermore, storing of such effluents is hampered by strict requirements and regulations, and is thus normally both expensive and troublesome. The soluble fibres resulting from potato processing are currently thus not exploited commercially. Potentially, these fibres would be an excellent ingredient for use in e.g. the food industry. Soluble fibres have the same wide range of applications within the food industry as mentioned above in connection with insoluble fibres. In addition, soluble fibres may have an even wider range of possible applications as compared to insoluble fibres. Soluble fibres can to a great extent be used as e.g. a sugar replacement agent in applications where solubility of the fibres is essential, such as e.g. in production of many confectionery products, etc.

Current commercially available soluble fibres (such as e.g. fructans, inulin, oligofructose, polydextrose, indigestible dextrins, etc.) are often relatively expensive. Due to the solubility in water, these products find widespread use in the food industry, in particular as a low calorie sugar substitute in combination with e.g. high intensity sweeteners. Soluble fibres can also be used to improve the nutritional qualities of various food products. Soluble fibres from potato would thus have numerous applications in the food industry, particularly if simple methods for providing products with little or no discolouration and little or no off-taste and/or off-flavour could be provided.

Most potato processing factories are processing potatoes and products derived from potato within a few months during fall, spanning the time of the potato harvest. The rest of the year, little or no activity takes place at these normally rather large production facilities. There is thus a need in the art for more efficient exploitation of such facilities by e.g. enabling efficient isolation of current by-products such as protein, fibre, and flavour and/or for methods that will enable storing of plant material that can be processed at a later stage. In addition, the provision of means for more efficient exploitation of such factories would potentially result in factories that are able to process increased amounts of potatoes or alternatively, the required size of the processing plants may be decreased.

*Processing of other crops*

Enzymatic browning of fruits and vegetables other than potatoes likewise creates heavy economic losses. It will be explained in the following why many of the problems associated with potato processing also apply in processing of other crops.

In juice processing of e.g. red berries like strawberries and raspberries, heat inactivation of PPOs tends to result in a low juice yield due to decreased ability to efficiently press heat treated fruits. Furthermore, many flavour compounds are often lost during heat treatments by e.g. oxidation, destruction or evaporation.

During production of e.g. apple juice, immediate prevention of enzymatic browning is crucial, since the browning processes occur within seconds and/or minutes after onset of processing and it is almost impossible to sell discoloured apple juice products. In order to avoid enzymatic browning, sulphites are thus widely used in apple juice production.

The most common processes for inhibiting enzymatic browning are sulphite treatments, heat treatments, or a combination of both. Heat treatment is the most widely utilised method for stabilising foods because of its capacity to destroy micro organisms and to inactivate enzymes. Steam blanching is one of the most effectively applied methods of heat treatment for controlling enzymatic browning in canned or frozen fruits, vegetables, and juices. Steam blanching is not however practical for the prevention of browning in fresh foods. Temperatures applied in steam blanching treatments vary in accordance with the thermostability of the enzyme to be inactivated as well as with the nature of the food product. Pasteurisation is generally conducted at temperatures ranging between 60°C and 85°C, while blanching techniques are often operated at temperatures between 70°C and 105°C or higher. In general, exposure of PPOs to temperatures in the 70-90°C range, results in the destruction of their catalytic activity.

A common solution to some of the problems associated with crop processing has been addition of sulphites. Sulphites are compounds that contain the sulphite ion $SO_3^{2-}$ such as e.g. sulphur dioxide, potassium bisulphite, potassium metabisulphite, sodium bisulphite, sodium metabisulphite or sodium sulphite. They are often used as preservatives in wines (to prevent spoilage and oxidation), dried fruits, dried potato products, and as an additive during fruit processing. Sulphites also occur naturally in almost all wines.

Some animals are allergic to sulphites, and may have difficulty breathing within minutes of eating a food containing sulphites. Asthmatics and people with allergies to aspirin (also known as salicylate sensitivity) are at an elevated risk for reaction to sulphites. The reaction can be fatal and requires immediate treatment at an emergency room, and can include sneezing, swelling of the throat, and hives. Those who are allergic to sulphites are urged to avoid products that could contain them.

The use of sulphites in food products is therefore strictly regulated by the national laws in various jurisdictions. It is plausible that the provision of an alternative to sulphite addition, which does not suffer from the above mentioned drawbacks, may eventually become a legal requirement in food production in various jurisdictions around the world.

However, use of sulphite is currently obligatory in processing of many vegetables in order to reduce or prevent enzymatic browning. Sulphites furthermore reduce the problems associated with bacterial contamination.

Acid treatments of chopped vegetables, such as peeled potatoes are sometimes employed for preventing enzymatic browning. However, low pH solutions tend to induce "case hardening" which is a surface firming observable in the cooked product, resulting in what is often described as "raw-like" lumps when the potatoes are mashed. The case-hardened layer often separates from the rest of the potato tissue during cooking.

US5912034 discloses a process for inhibiting enzymatic browning of fresh peeled potatoes. The process comprises a heating step in the presence of organic acid followed by addition of base and reducing agents.

Lemon juice is sometimes added to chopped vegetables in order to prevent browning in household cooking. However, this approach is normally not applicable in connection with industrial food processing since it appears that most applications require relatively large amounts of lemon juice in order to obtain a sufficiently efficient and irreversible inhibition of browning. It follows that, apart from constituting a relatively expensive approach, novel problems are created with respect to subsequent removal of the lemon juice. Lemon juice consists of various compounds like e.g. phenolics, that may not be desirable in certain food applications. Presence of residual lemon juice or lemon juice components will constitute a problem with respect to later applications of refined plant products such as e.g. starch, protein, fibres, and flavour.

It follows that it would be desirable to obtain simple and efficient methods for inhibiting enzymatic browning of fresh plant material, as well as products derived from such material, preferably without employing any heating steps. Likewise, it would be desirable if such methods were also efficient in the prevention of unwanted non-enzymatic browning reactions. In particular, there is a need for such efficient methods that do not employ compounds that are potentially hazardous to either human health or the environment.

Furthermore, there is a need in the art for simple methods wherein sulphite addition can be significantly reduced or even avoided. Such methods should preferably not impose any health or environmental risks.

Furthermore, there is a need in the art for methods for reducing the environmental hazard associated with outlet of fruit juice or fruit water from e.g. potato starch production. Likewise, there is a need in the art for methods for turning one or more current waste products into useful ingredients, such as e.g. one or more of the following components: protein, soluble fibres, glycoalkaloids, phenolic compounds, insoluble fibres, chelating agent, and flavour. Similarly, there is a need in the art for more efficient exploitation of existing production facilities such as e.g. potato factories.

Even though current methods exist for partly or fully purifying the water used in the processes, this recycled potato water has an intense potato flavour/odour.

Furthermore, there is a need in the art for providing an alternative to plant proteins that are currently used in the food industry. Such alternative plant proteins should preferably be cost efficient and should preferably have good functional properties. In particular, there is a need in the art for simple and efficient methods for extracting potentially valuable components from fruit juice from e.g. potatoes.

Furthermore, there is a need in the art for simple and efficient methods for isolation of plant components such as e.g. carbohydrates, starch, protein, soluble fibres, and insoluble fibres, wherein discolouration of the products is reduced or avoided.

In particular, there is a need within the field of potato production for simple and efficient methods for production of potato starch, protein, soluble fibres, and insoluble fibres, wherein the final products have little or preferably no potato flavour.

Furthermore, there is a need in the art for methods that will enable exploitation of soluble and insoluble fibres from the potato as a valuable and useful additive for use in e.g. the food industry.

Furthermore, there is a need in the art for methods for extracting potato flavour in order to provide means for improving the flavour of e.g. industrially produced mashed potatoes, mashed potato powder products, French fries, etc.

Finally, there is a need in the art for more efficient plant processing factories.

**Brief description of the invention**

The present invention relates to a process for the manufacture of a product from a plant material comprising the steps of:

- providing a plant material;
- disrupting the plant material to disrupt the cell walls of cells in the plant material;
- adding a chelating agent to the disrupted plant material to a concentration of 1-200 mM in the liquid fraction;
- adjusting the pH of the plant material to a value of from about 2.0 to about 4.5;
- contacting the plant material with a cation-exchange chromatography resin to separate a binding fraction from a non-binding fraction;
- contacting the cation-exchange chromatography resin with an eluent solution to elute a soluble product from the binding fraction from the cation-exchange chromatography resin.

The plant material may be any plant material, which may be discoloured upon exposure to oxidising conditions, such as by contact with oxygen. In particular, the plant material may be from a plant containing a polyphenol oxidase (PPO) enzyme. Potatoes or fractions of potatoes are particularly preferred.

Enzymatic browning and non-enzymatic browning commonly occur following disruption of a plant material, especially a plant material containing a PPO enzyme. For the purpose of the present invention any disruption method is appropriate, and the specific type of disruption principle employed may be chosen depending on the nature of the plant material. For example, the disruption principle may selected from such parameters as the water content of the plant material, the size of the plant material or individual pieces of the plant material prior to the disruption, and the hardness of the plant material or individual pieces of the plant material. The disruption principle is typically selected so as to allow the disruption of the cell walls of cells in the plant material, and typical principles comprises cutting, pressing, chopping, milling, grinding, shredding, grating etc. In a preferred embodiment plant material derived from potatoes is disrupted by shredding or grating. Disruption of the plant material may be performed directly on the plant material, although in some cases it may also be necessary to provide the plant material with a liquid, such as water, during the disruption.

Any chelating agent is appropriate for use as a chelating agent in the process of the invention, although it is preferred that the chelating agent is compatible with applications for foods and beverages for human consumption or with applications for animal fodder. Especially, it is preferred that the chelating agent does not have any toxic effects in humans or animals at the concentration used. Typical chelating agents are organic molecules containing one or more carboxylic acid groups and/or one or more hydroxyl groups (i.e. molecules which may also be considered to be bi- or multidentate), such as citric acid, citrate, oxalic acid, oxalate, lactic acid, lactate, malic acid, malate, maleonic acid, maleonate, tartaric acid, tartrate, succinic acid, succinate, or any mixture thereof; the chelating agent may be employed in a fully charged form, an uncharged form, or a form containing both charged and uncharged carboxylic acid groups. The chelating agent is not limited to organic molecules, and in a certain embodiment an inorganic molecule, e.g. phosphate or phosphoric acid, is employed as the chelating agent. It is also possible to use a mixture of organic and inorganic molecules as a chelating agent. Citric acid and citrate are particularly preferred.

The amounts of chelating agent used in the process of the invention ranges from 1-200 mM; this concentration refers to the concentration of the chelating agent in the plant material after addition of the chelating agent. In particular, the concentration refers to the liquid fraction of the plant material. The concentration may have any value within the range of 1-200 mM, such as within 2-150 mM, 3-150 mM, 4-150 mM 5-150 mM, 6-150 mM, 7-150 mM, 8-150 mM, 9-150 mM, 10-150 mM, 10-100 mM, 10-50 mM, 20-50 mM, 20-100 mM, 20-130 mM, 30-130 mM, 40-140 mM, 50-150 mM, 100-150 mM, or 50-100 mM.

In some embodiments of the invention, the process further comprises removing the chelating agent from the plant material. Any appropriate method may be used to remove the chelating agent, and the removal may be performed at any stage following the inhibition of the browning of the plant material. In particular, the chelating agent may be removed following subsequent, appropriate processing steps, such as following separation of the plant material into solid and liquid fractions, or following recovery of a component of interest from a solid or from a liquid fraction. The chelating agent may for example be removed from a solid fraction by washing; when it is desired to remove a chelating agent from a liquid fraction this may be achieved by contacting the liquid fraction with an anion-exchange resin, by precipitating the chelating agent by contacting it with an appropriate precipitating agent, or the chelating agent may be removed by degradation, e.g. by enzymatic degradation. If a component of interest is isolated, e.g. selectively, from the plant material the chelating agent may also be considered removed from the component of interest.

The method used to adjust the pH is not limited to any particular principle. In some embodiments, the addition of the chelating agent will in itself sufficiently adjust the pH to be within about 2.0 to about 4.5, e.g. about 2.3 to about 4.5 due to the inherent acidity of the chelating agent. In other embodiments an additional acid is added in order to adjust the pH. Any additional acid may be used, although it is preferred to use an inorganic acid, such as sulphuric acid or phosphoric acid, or combinations thereof. It is furthermore also preferred that the acid used for adjusting the pH is compatible with applications for foods and beverages for human consumption or with applications for animal fodder.

The exact value to which the pH is adjusted will depend on the specific plant material to be processed, while considering such parameters as the activity profile of PPO enzymes present in the plant and/or the composition of the plant material regarding constituents such as total protein, content of carbohydrates, such as pectins, starches, celluloses, hemicelluloses etc. In the process of the invention the pH is adjusted to be within about 2.0 to about 4.5, such as about 2.3 to about 4.5, such as about 2.7 to 4.5, about 2.7 to 4, about 3 to 4 or about 3.5 to 4. According to the present invention it is undesirable to employ pH values below about 2.0 since the likelihood of extracting undesired coloured compounds such as e.g. cyanidins and pro-anthocyanidins is increased. Also, some proteins may unfold or denature fully or partly under pH values below 1.5 or 2. It is also undesirable to employ pH values above 6 or 7 since PPO enzymes may not become sufficiently inhibited. pH values above 7 may furthermore result in undesirable browning reactions due to non-enzymatic degradation of some phenolic compounds.

The order of the steps in the process is not relevant, and following the step of providing the plant material the remaining steps may be performed in any order. In one embodiment the steps of disrupting the plant material, adding a chelating agent to the disrupted plant material to a concentration of 1-200 mM in the liquid fraction and adjusting pH of the plant material to a value of from about 2.0 to about 4.5 are performed virtually simultaneously, so that the chelating agent is added to the plant material during disruption while also monitoring and adjusting the pH. In other embodiments, the plant material is disrupted before adding the chelating agent and adjusting the pH, and in some embodiments the steps of adding the chelating agent and adjusting the pH are performed after other further procedural steps, such as removing a solid fraction from the plant material. In these embodiments, the steps of adding the chelating agent and adjusting the pH may be performed simultaneously, or the chelating agent may be added before adjusting the pH. It is also possible to adjust the pH and then add the chelating agent. In general it is however preferred to add the chelating agent and adjust the pH at the latest shortly after disruption of the plant material, such as 1 min after the disruption. After addition of the chelating agent and adjusting pH, the chelating agent and the low pH may be allowed to inhibit browning of the plant material for a sufficient period of time. Commonly, the inhibiting effect will start immediately, although it is also possible to allow the effect to take place over a period of at least one second, at least 10 seconds, at least 30 seconds, at least one minute, at least 5 minutes, at least 10 minutes, at least about 15 minutes, at least 30 minutes, or at least about one hour. However, for some applications it may also be practical to store the plant material for longer periods of time after addition of the chelating agent and adjusting pH, such as e.g. one day, one week, one month or even up to one year before subjecting the material to further processing steps and optionally removing the chelating agent. If the plant material is stored for longer periods of time (e.g. several weeks or months) it may be an advantage to store the material under relatively cool conditions such as e.g. not more than ambient temperature, e.g. 25°C, although it may also be cooled to a lower temperature, such as 15°C, 10°C, 8°C or 5°C, or alternatively 2-4°C. It is also possible to maintain the temperature below this temperature, such as from -20°C to 2°C during the incubation.

The invention further relates to the aspects discussed below. However, the specifications disclosed above for the first aspect of the invention apply equally to any further aspect of the invention.

In other aspects the invention relates to processes for the manufacture of a soluble product and a soluble component from a plant material, respectively. These processes comprise the steps of providing a plant material; disrupting the plant material; adding a chelating agent to the disrupted plant material to a concentration of 1-200 mM in the liquid fraction; and adjusting the pH of the plant material to a value of from about 2.0 to about 4.5, and contacting the plant material with a cation-exchange chromatography resin to separate a binding fraction from a non-binding fraction. In one aspect the cation-exchange chromatography resin is then contacted with an eluent solution to elute a soluble product from the binding fraction from the cation-exchange chromatography resin, and in another aspect a soluble component is isolated from the non-binding fraction.

Any unit operation for contacting a liquid material with a chromatography resin is appropriate for these aspects of the invention. For example, the plant material may be contacted with the cation-exchange chromatography resin in a stirred tank reactor, or in a packed or expanded bed column. Depending on the nature of the unit operation used in the contacting step the plant material may be clarified, such as by screening, filtration or centrifugation, prior to applying the plant material to the unit operation. In either aspect, it may be relevant to adjust the pH of the plant material prior to contacting with the cation-exchange chromatography resin. For example, the pH may be further adjusted to a value from about 3.5 to about 5.5. Such adjustment may be provided by the addition of an acid or base, e.g. $H_2SO_4$ or NaOH, respectively, as appropriate, or by addition of a buffer.

In the aspect related to the manufacture of the soluble product from a plant material, the binding fraction is eluted from the cation-exchange chromatography resin by contacting it with an eluent solution. The eluent solution may have a higher pH, a higher ionic strength or a combination of a higher pH and a higher ionic strength than the plant material. It is preferred to use an eluent solution with a higher pH than the pH of the plant material contacted with the chromatography resin. However, in one embodiment the bound material is further fractioned by contacting the cation-exchange chromatography resin with bound material with gradually changing elution conditions, for example by first contacting the resin with a first eluent solution of a higher pH than the plant material, then with another eluent solution of a higher pH than the first eluent solution. The cation-exchange chromatography resin may then be contacted with yet other eluent solution(s). The changes from binding material, or an optional washing solution, to the series of eluent solutions may take place in a step-wise fashion, or the conditions may be changed gradually in a so-called gradient-type elution.

The product obtainable in this process of the invention may be a neutral protein, an alkaline protein, and/or a neutral and/or cationic non-proteinaceous compound. A neutral and/or cationic non-proteinaceous compound may be eluted first after the contacting step to bind components to the cation-exchange chromatography resin by eluting with the first eluent solution, then a neutral protein may be eluted with another eluent solution, and finally an alkaline protein may be eluted with yet another eluent solution; wherein each eluent solution represents stronger elution conditions, e.g. an increasing pH or a higher ionic strength. The products indicated above, which are obtainable in this process are within the scope of the invention.

It is preferred to employ a plant material derived from potatoes in this aspect of the invention, and in this case

**EP 2 320 744 B1**

examples of relevant components which may bind to a cation-exchange chromatography resin are native protein and alkaline protein; non-proteinaceous compounds may comprise a glycoalkaloid or an alkaline peptide. These products are all considered within the scope of the invention.

In the aspect of the invention relating to a process for manufacture of a soluble component which is isolated from the non-binding fraction of the cation-exchange step, the soluble component of interest may be isolated from the non-binding fraction by adding a precipitating agent to the non-binding fraction to precipitate the soluble component. Any precipitating agent capable of selectively precipitating the soluble component of interest is relevant; in one embodiment the precipitating agent is an alcohol, for example isopropanol. In another embodiment, ethanol is employed as the precipitating agent. The concentration of the alcohol may be about 10-80%, for example about 10%, 20%, 30%, 40%, 50%, 60%, 70%, or 80%.

The process may also further comprise a concentrating step prior to adding the precipitating agent. Any concentrating step capable of removing water from the non-binding fraction may be employed; a preferred concentrating step is ultrafiltration. Suitable ultrafiltration membranes are those with cut-off values of 100 kDa, 20 kDa, 15 kDa, 10 kDa, 8 kDa, 5 kDa or even finer membranes depending on the specific application. Other methods such as e.g. diafiltration or nanofiltration may also be employed.

Following addition of the precipitating agent the soluble component may be obtained from the liquid suspension using any appropriate method, such as a solid-liquid separation method, e.g. centrifugation or filtration, or the liquid may be removed from the suspension, e.g. by evaporation, vacuum evaporation, freeze drying, spin flash drying, spray drying, floating bead drying or the like. It is also possible to combine several of these principles to obtain the precipitated soluble component.

The soluble component may be a soluble plant fibre, and the invention also relates to soluble plant fibres obtainable in the process. Soluble plant fibres are generally composed of carbohydrates, and the soluble fibres may comprise pectin and hemicellulose.

In yet another embodiment, flavour components from the liquid non-binding fraction of the cation-exchange step, e.g. after the optional concentration step are isolated by hydrophobic interaction chromatography or by reverse phase chromatography, wherein said flavour components bind to the stationary phase in a hydrophobic interaction or reverse phase chromatography process. Such components could e.g. be isolated from a permeate fraction after ultrafiltration of the non-binding fraction of the cation-exchange step or from a condensate fraction after evaporative concentration of the non-binding fraction of the cation-exchange step. Any appropriate chromatography system can be employed, but C-18 columns seem to work particularly well. Flavour components are easily eluted from the columns using organic solutions, or solutions comprising relatively large amounts of organic solvents - such as at least 50% organic solvent.

In another embodiment, the run-through fraction from the hydrophobic interaction chromatography or reverse phase chromatography is applied to an anion-exchange chromatography step, in which chelating agent and phenolic compounds may be bound to the anion-exchange chromatography resin; the bound components may subsequently be eluted using an eluent solution of an increased ionic strength or of a lower pH than the run-through fraction applied to the anion-exchange chromatography resin. The run-through fraction from the hydrophobic interaction chromatography or reverse phase chromatography may also be pH adjusted to above the pI value of the chelating agent or the phenolic compound prior to applying to the anion-exchange chromatography step.

In yet another aspect the invention relates to process for the manufacture of an insoluble product from a plant material. This process comprises the steps of providing a plant material; disrupting the plant material; adding a chelating agent to the disrupted plant material to a concentration of 1-200 mM in the liquid fraction; and adjusting the pH of the plant material to a value of from about 2.0 to about 4.5; separating the plant material into a liquid fraction and a solid fraction; and isolating an insoluble component from the solid fraction. Any solid-liquid separation principle may be used for separating the plant material into a liquid fraction and a solid fraction, and examples of appropriate principles are screening, filtration and centrifugation.

The solid fraction thus obtained may be further processed, and other embodiments of the invention comprise the step of adding water to the solid fraction to obtain a suspension of insoluble components; adjusting the pH to a value of 5.8 or higher; and screening the suspension to provide a fraction comprising coarse grained insoluble components of a size larger than about 500 μm and a fraction comprising fine grained insoluble components of a size smaller than about 500 μm. In other embodiments the suspension is screened to separate coarse grained insoluble components of a size larger than 250 μm or 125 μm using screens or filters with these respective mask sizes. This separation of the insoluble components into coarse and fine grained components, e.g. with coarse grained components of a size larger than 500 μm, 250 μm or 125 μm, may be obtained using any method capable of separating particles in a suspension according to size, and in this process the separation is generally referred to as "screening". This should not, however, be considered as limiting, and any sieve, filter or the like may be used. An appropriate filtration unit operation is the type known as centrifugal sieving. In one embodiment the insoluble product is isolated from the coarse grained insoluble components, and in another embodiment the insoluble product is isolated from the fine grained insoluble components.

In one embodiment of this aspect, the pH of the plant material is lowered to about 2.0 to about 4.5, e.g. about

8

2.3 to about 4.5 before disrupting the plant material, so that the disruption step is performed at low pH. The solid material is then separated from the plant material, and the pH of the solid fraction is adjusted to a value of 5.8 or higher. The solid fraction may also be washed, e.g. with water, before adjusting the pH to 5.8 or higher. Thus, a fraction comprising a coarse grained insoluble component may be isolated from the plant material which has been disrupted under low pH conditions, and likewise a fraction containing a fine grained insoluble component may also be isolated from this plant material.

In the fraction comprising fine grained insoluble components, the components will be of a size smaller than about 500 $\mu$m, 250 $\mu$m or 125 $\mu$m, respectively, and the process may also comprise additional size fractionation steps. The screening to provide the fine grained fraction will typically result in it that the fine grained particles smaller than 40 $\mu$m are contained in a liquid suspension. Additional size fractionation steps may be performed at any time after the screening step to separate the coarse grained fraction from the fine grained fraction. For example, the fine grained fraction may be subjected to an additional screening or filtration to provide a fine grained fraction of e.g. 40-500 $\mu$m size, 60-500 $\mu$m or 125-500 $\mu$m size, 250-500 $\mu$m, 40-125 $\mu$m size 40-250 $\mu$m, 60-125 $\mu$m, or 60-250 etc. $\mu$m, by screening, filtering, sieving or the like, the suspension through a filter or sieve allowing passage of particles of a size up to 250 $\mu$m, 125 $\mu$m, 60 $\mu$m or up to 40 $\mu$m, respectively. In general, the fine grained fraction will be resuspended in a liquid, e.g. a solvent, water, etc., prior to subjecting the fine grained fraction to any further size fractionation or other processing. It is also possible to process fractions obtained by additional screening, e.g. fractions of particles sizes above 500 $\mu$m or above 125 $\mu$m, to reduce the size of the particles, e.g. by grinding or milling or the like.

In the fraction comprising coarse grained insoluble components, the insoluble components will be of a size larger than about 500 $\mu$m, 250 $\mu$m or 125 $\mu$m, respectively. The screening to provide the coarse grained fraction will typically result in it that the coarse grained particles larger than about 500 $\mu$m, 250 $\mu$m or 125 $\mu$m are contained in a semisolid suspension. In one embodiment this suspension is subjected to a further solid-liquid operation to obtain the insoluble product. For example, the suspension may be subjected to centrifugation, filtration, evaporation or the like.

After separation of the coarse grained insoluble components from the fine grained insoluble components, either fraction of components may be subjected to washing steps, e.g. with water or another solvent, to remove undesired components. Either fraction may also be subjected to adjustment of pH. The respective components may then be obtained from a liquid suspension using any appropriate method, such as a solid-liquid separation method, e.g. centrifugation or filtration, or the liquid may be removed from the suspension, e.g. by evaporation, vacuum evaporation, spray drying, flash drying, spin flash drying or the like. It is also possible to combine several of these principles to obtain the respective insoluble component.

The invention also relates to a product comprising the insoluble component obtainable in the above process. The insoluble components will comprise plant fibres of carbohydrate and other composition; the coarse grained insoluble component generally represents a lignin enriched plant fibre, whereas the fine grained insoluble component generally represents a cellulose enriched plant fibre. Thus, the invention relates to a product which is a lignin enriched plant fibre, and to a product which is a cellulose enriched plant fibre obtainable in the processes of the invention.

In yet another aspect, the invention relates to a process for the manufacture of a protein product from a plant material, the process comprising the steps of providing a plant material; disrupting the plant material; adding a chelating agent to the disrupted plant material to a concentration of 1-200 mM in the liquid fraction; and adjusting the pH of the plant material to a value of from about 2.0 to about 4.5; separating the plant material into a liquid fraction and a solid fraction; sedimenting a protein component from the liquid fraction; and isolating the sedimented protein component. In general, the step of adjusting the pH of the plant material may lead to the precipitation of a protein from the liquid fraction of the plant material. The precipitation may begin at the time of adjusting the pH or the plant material may be incubated for a period of time before precipitation takes place. The precipitated protein product preferably has an isoelectric point (pI) within the range of about 4.5 to about 5.2.

The adjustment of the pH to a value of from about 2.0 to about 4.5, such as from about 2.3 to about 4.5 will, together with the presence of the chelating agent, inhibit browning of the plant material as disclosed above. However, in order to achieve better control over the precipitation of protein from the plant material the process may comprise a further step of adjusting the pH to a value of about 4.5 to about 5.2. When a further adjustment of pH is employed this adjustment will normally take place after a sufficient amount of time, as outlined above, has been allowed to achieve inhibition of browning of the plant material. In one embodiment the protein precipitation is enhanced by dissolving the precipitated protein by increasing the pH to 9-10 or higher followed by an adjustment, preferably a fast adjustment, such as an immediate adjustment, of the pH to about 2.0 to 6.0, preferably between 2.3 and 4.5, or more preferably 4.5 to 5.2. These steps of increasing the pH to 9-10 or higher followed by a decrease in pH to about 2.0 to 6.0, between 2.3 and 4.5, or about 4.5 to 5.2 may provide a better control of the precipitation of the protein; by increasing the pH of the liquid with the protein, which is precipitated, e.g. flocculated or otherwise suspended in an undissolved form, may be redissolved before yet again being precipitated by decreasing the pH as outlined above.

Protein present in the liquid fraction may for some plant materials, e.g. for plant material derived from potatoes, separate into two apparent fractions or phases upon precipitation or sedimentation of the protein. For example, a lower phase generally comprising the precipitated or sedimented protein in the form of flocculates or another undissolved form, and an upper phase of a clear liquid generally comprising dissolved protein may form. The lower phase may be differentiated from the upper phase by having an opaque, such as milky, appearance, whereas the upper phase will typically be clear. In one embodiment, the liquid fraction comprising the sedimented protein is separated into an upper phase, e.g. a clear upper phase, and a lower phase, e.g. an opaque or milky lower phase, and the sedimented protein component is isolated from the lower phase. Separation of the liquid fraction into an upper and a lower phase may be obtained using any technique for liquid-liquid separation. For example, the separation may involve decantation or centrifugation or the like. The sedimented protein may be isolated from the separated lower phase using any of the methods described above. For example, the pH of the lower phase may be adjusted to a value of from about 4.5 to about 5.2 to precipitate the protein, or the pH may first be increased to 9-10 or higher to dissolve the precipitated protein of the lower phase followed by a decrease in pH to about 2.0 to 6.0, between about 2.3 and 4.5, or about 4.5 to 5.2 to reprecipitate the protein.

When the liquid fraction has been separated into an upper and a lower phase a protein component may also be isolated from the upper phase. This protein component will generally be in a soluble form in the upper phase, and in one embodiment a soluble product, i.e. a protein component, is isolated by contacting the upper phase with a cation-exchange chromatography resin as described above.

Regardless of whether the further pH adjustment is included in the process, and regardless of whether the liquid fraction has been separated into an upper and a lower phase, the process may comprise incubating the pH adjusted plant material with the added chelating agent for a period of time ranging from few seconds or minutes or longer, such as from 1 day up to about 12 months. During the incubation period the temperature of the plant material may correspond to the ambient temperature, e.g. typically about 25°C, or the temperature may be lowered by cooling the plant material. For example, the plant material may be kept at a temperature such as 15°C, 10°C, 8°C or 5°C, or alternatively 2-4°C during the incubation. It is also possible to maintain the temperature below this temperature, such as from -20°C to 2°C during the incubation.

In yet another embodiment the protein product prepared as above is treated with a decolourising agent. Any decolourising agent may be used, such as a physical or chemical decolourising agent. One example of a physical decolourising agent is an adsorbent material, such as of the types known as bleaching clay, bleaching earth, bentonite clay, activated earths, activated bleaching earths (ABC), absorption clay, whitening clay etc. Examples of chemical decolourising agents comprise ammonia, peroxides, such as hydrogen peroxide, organic peroxides, urea peroxide, perborates, percarbonates, persulfates perphosphates, hypochlorites, e.g. in the form of their sodium salts. Other decolourising agents are well-known to a skilled person.

Following sedimentation of protein from the plant material, the protein component may be isolated using any solid-liquid separation principle. In one embodiment, the protein component is isolated by filtration. Filtration may be performed through any commercially available filter material, and it may be performed in any type of filtration operation, such as the types known as vacuum filtration, pressure filtration, cross-flow filtration, basket centrifugation, deep bed filtration, etc. The protein component may also be isolated using centrifugation, e.g. in a solid bowl centrifuge, tubular bowl centrifuge, decanter centrifuge, disk-stack centrifuge etc.

After isolation of the sedimented protein component, this component may be washed by addition of solvent at pH about 2.0 to 5.2 followed by further isolation using any solid-liquid separation technique.

Finally, the protein component may be redissolved in water or buffer at a pH higher than about 5.2 and insoluble parts may be separated from the soluble part by any solid-liquid separation technique. The soluble protein fraction may then be dried by any drying methods either directly or after a concentration step using any concentration techniques, such as evaporation, vacuum evaporation, ultrafiltration, diafiltration etc.

In a certain aspect, the above sedimentation process is employed with a plant material derived from potatoes, and in this case the sedimented protein product thus obtained is known as patatin. The invention also relates to patatin obtainable in a process as described above.

A certain aspect of the invention provides an integrated process for processing a plant material employing the above processes in an integrated set-up. An integrated process will comprise at least two of the above processes, but need not comprise all the above processes; the exact processes for a given set-up will depend on the starting material and the components of interest contained in the starting material. In the integrated process set-up, each of the above processes will typically yield a fraction comprising a component of interest for that specific process and another fraction, which may be used as a starting material in another process described above.

In this integrated process, a plant material is initially disrupted and treated to inhibit browning as described above. This plant material may then be subjected to a solid-liquid separation, e.g. a screening, to provide a solid and a liquid fraction. The liquid fraction may then be subjected to a sedimentation process as described above to sediment a protein product which may be recovered in the above filtration or centrifugation procedure. The liquid fraction from which the sedimented protein has been removed is then contacted with a cation-exchange chromatography resin, and the binding and non-binding fractions processed as described above in the respective processes. The originally separated solid fraction is likewise processed in the respective processes to provide the coarse and fine grained insoluble products, e.g. the insoluble fibre products.

**Brief description of the figures**

Figure 1 shows a schematic flow diagram illustrating the process steps leading to isolation of various valuable products derived from crops of vegetable or fungal origin.

Figure 2 shows a schematic flow diagram illustrating the process steps leading to isolation of various valuable products derived from potato.

Figure 3 shows a schematic flow diagram illustrating the process steps leading to isolation of various products derived from potato fruit water.

Figure 4 shows a schematic flow diagram illustrating the process steps leading to isolation of insoluble fibres derived from potato pulp.

Figure 5 shows a schematic flow diagram illustrating the process steps leading to isolation of various fibres derived from potato pulp.

Figure 6 shows a schematic flow diagram illustrating the process steps leading to production of soluble fibres derived from potato fruit juice.

Figure 7 shows the influence of different complex binders in different concentration on potato polyphenol oxidase (PPO) activity. Holding time was 10 min and assay pH was 7.0.

Figure 8 shows an elution profile from pilot purification of proteins from fresh potato juice. UV absorbance was measured at 280 nm. The second peak comprises basic proteins.

**Detailed description of the invention**

The present invention relates to a process for inhibiting browning of plant products; the present invention also relates to processes for the manufacture of a soluble product, a soluble component, an insoluble product, and an insoluble component. The invention also relates to products obtainable in these processes.
In order to more fully explain the invention it is disclosed in more detail below, and definitions of the terms employed in this document are given.
"Plant material" as referred to in connection with the present invention refers to any plant material, and it may refer to whole plants, certain parts of plants, such as fruits, leaves, stems, roots, tubers, nuts, berries, etc., or any mixtures of these. In general, the plant material will be subjected to some degree of disruptive processing in the methods of the present invention. This disruptive processing (or "disruption" or derived forms of this term) may be any processing intended to reduce the size of parts or particles of the plant material, and typical disruptive processing involves cutting, pressing, chopping, milling, grinding, crushing, grating, shredding etc. In particular the disruption aims to degrade or disrupt the cell walls of the plant material to make the contents of the cells accessible. The terms plant material and disrupted plant material may also refer to any liquid produced in the disruptive processing, and the term "plant material" may thus refer to any whole plant, any part of a plant, a solid or liquid material obtained during disruptive processing or a mixture of these.
The plants from which to obtain the plant material for the present invention are not particularly limited, and any plant may be used. It is preferred to use industrially relevant plants in the method of the invention, such as those that are commonly termed "crops". Examples of such crops include but are not limited to: rice, wheat, corn, pea, manioc, cassava, bamboo, tapioca, potatoes, sugar cane, sugar beet, tomato, grape, litchi, loquat, plantain, persimmon, eggplant, guava, uchuva (ground cherry), chili pepper, blackcurrant, redcurrant, cranberry, blueberry, gooseberry, strawberry, blackberry, raspberry, boysenberry, tomato, pomegranate, avocado, kiwifruit, grape, banana, squash, pumpkin, gourd, cucumber, melon, cantaloupe, watermelon, orange, lemon, lime, grapefruit, apple, peach, cherry, green bean, sunflower seed, hazel nut, walnut, peanut, almond, pistachio nut, pecan nut, barley, oat, Jerusalem artichoke, chicory, parsnip, etc. However, the crops are not limited to crops of plant origin. Crops of fungal origin such as e.g. mushrooms like champignon can also be processed using the methods according to the present invention.
All plants contain a wealth of various enzymes with oxidative capabilities. Many oxidative enzymes are represented by a multitude of isoenzymes. The oxidases are usually divided into two major groups; peroxidases and polyphenol oxidases (PPO)s. Cellular disruption occurring during processing allows the interaction of PPOs and phenolic compounds which are compartmentalised in normal intact cells.

Peroxidases are defined as heme-containing enzymes that mediate oxidation of a variety of organic molecules using hydrogen peroxide as an electron acceptor.

PPOs are present in higher plants, bacteria, fungi and animals. They are mostly bi-copper oxygen-dependent metalloenzymes that catalyse either one or two electron oxidations of phenols using oxygen as an electron acceptor. PPO enzymes catalyse the o-hydroxylation of monophenols (phenol molecules in which the benzene ring contains a single hydroxyl substituent) to o-diphenols (phenol molecules containing two hydroxyl substituents). They can also further catalyse the oxidation of o-diphenols to produce o-quinones. It is the rapid polymerisation of o-quinones to produce black, brown or red pigments (polyphenols) that is the primary cause of fruit browning. The amino acid tyrosine contains a single phenolic ring that may be oxidised by the action of PPOs to form o-quinone. Consequently PPOs may also be referred to as tyrosinases. Furthermore, it is likely that that the quinones may also react with other plant components such as e.g. proteins in order to form coloured polymerisation products that may also contribute to the browning reaction.

Enzyme nomenclature differentiates between monophenol oxidase enzymes (tyrosinases/cresolases) and o-diphenol:oxygen oxidoreductase enzymes (catechol oxidases). A major class of oxidases in plants is the "blue copper oxidase" enzyme family that includes enzymes such as ascorbate oxidases, laccases and ceruloplasmin.

PPOs have been isolated and studied from a wide variety of plant species, and it appears that probably all plants encode and express PPOs. PPOs from different species are diverse in terms of their structural properties, tissue distribution and cellular location, primary structure, size, glycosylation pattern and activation characteristics. However, all PPOs have in common a binuclear type 3 copper center within their active site, where two copper atoms are each coordinated with three histidine residues. Enzyme activity is thus dependent on copper. Copper is most likely inserted in most PPOs during translation of the proteins, meaning that activity can rarely be restored upon addition of copper to copper depleted enzymes.

The present inventors have now found that enzymatic browning of plant material may be inhibited in a process comprising the steps of providing a plant material; disrupting the plant material; adding a chelating agent to the disrupted plant material to a concentration of 1-200 mM in the liquid fraction; and adjusting the pH of the plant material to a value of from about 2.0 to about 4.5. Inhibition of browning may be measured indirectly as inhibition of PPO enzyme activity as described in the Examples, and according to the invention browning reactions are decreased at least 20%, at least 30%, at least 40%, at least 50%, at least 60%, at least 70%, at least 80%, or at least 90%, such as at least 95%, at least 96%, at least 97%, at least 98%, or at least 99% compared to similar methods where no measures are taken to prevent browning. Browning and/or inhibition of browning can be measured as early as about one minute after cutting, pressing, chopping, milling, grinding, crushing, grating, shredding or any other disruptive processing. Browning may also be recorded after e.g. one hour, two hours, 10 hours, 1 day, several days, or weeks after onset of processing. In some cases, browning or inhibition of browning can be measured months or even years after disruption, in particular in connection with dry products such e.g. protein, starch, fibres, powders, etc.

Alternatively, comparative browning measurements may be performed in connection with contact between oxidase inhibited (and optionally non-treated) plant material and non-inhibited plant material. The processes of the present invention may additionally result in partial or full removal of phenolic compounds - the precursors for many coloured compounds - from components of interest of the plant material, so that subsequent browning reactions may be prevented. Decreased content of colour precursors thus results in decreased browning upon contact with PPO enzymes derived from non-inhibited plant material. This may be an advantage in a wide range of later applications in various industries. "phenolic compounds", sometimes called phenolics, are a class of chemical compounds consisting of a hydroxyl group attached to an aromatic hydrocarbon group. The simplest of the class is phenol ($C_6H_5OH$). The phenolic compounds may or may not be polymerised - and they may also be a mixture of polymerised and non-polymerised phenols. Many polymerisation products are coloured products.

The "chelating agent" refers to any chemical compound capable of chelating a metal ion in solution. Chelating agents may also be referred to as complex binders. Chelation refers to the binding or complexation of a bi- or multidentate ligand to a single compound or ion. Such chelation may be employed to sequester a metal ion from a solution to reduce the availability of the metal ion to other binding or reaction partners possibly present in the solution due to the strong and stable interaction between the chelating agent and the metal ion. The increased stability of a chelated complex is called the chelate effect. The effect is therefore entropic in that more sites are used by fewer ligands and this leaves more unbonded molecules: a total increase in the number of molecules in solution and a corresponding increase in entropy. Addition of chelating agents is commonly used for inhibiting enzyme activity, in particular enzymes where enzyme activity depends on presence of metal ions.

Chelating agents according to the present invention include any chelating agent with the ability to form complexes under conditions of low pH, i.e. at pH-values below 7. However, it is preferred to use chelating agents that do not have any reported toxic effects in humans or animals, in particular within the dose ranges that are contemplated herein. It is furthermore preferred to use chelating agents that are readily available and relatively cheap. Examples of particularly preferred chelating agents according to the present invention include e.g. citric acid/citrate. Other appropriate chelating agents include oxalic acid, oxalate, lactic acid, lactate, malic acid, malate, maleonic acid, maleonate, tartaric acid, tartrate, succinic acid, succinate, phosphoric acid, phosphate. The chelating agents may also be used in any combination. Chelating agents are typically multivalent acids, and therefore exist in several different salt forms, e.g. as fully protonated acids, or as partly or fully deprotonated sodium salts. Any form of the chelating agents may be employed in the present invention. However, when basic, deprotonated forms are employed these are preferably used as sodium salts.

Chelating agents may be selected *inter alia* from information regarding the formation or equilibrium constant ($logK_{eq}$), i.e. how strongly a chelating agent may bind to, e.g. chelate, a given metal ion, and the acidity (as illustrated with the $pK_a$'-value) of the chelating agent. Values $pK_a$' and $logK_{eq}$ for chelating $Cu^{2+}$-ions for citrate and other examples of chelating agents are given in Table 1 below; this Table is not limiting in any way to the invention but serves as an illustration of parameters which may considered in the selection of the chelating agent.

Table 1 List of $pK_a$' values for selected chelating agents and their equlibrium constants ($K_1$ values) when acting as ligands with $Cu^{2+}$, given as $logK_{eq}(Cu^{2+})$. Abbreviations: gl1: glass electrode at 25°C and an ionic strength of 0.1 M; gl2: glass electrode at 20°C in 1 M $NaClO_4$; con: Conductivity af 25°C; E: Electromotive force, not specified. (Data from: Stability constants of metal-ion complexes, compiled by Lars Gunnar Sillén and Arthur E. Martell, The Chemical Society, Burlington House, Special Publication No. 17, 1964, 754 pp).

| | $pK_a$' | $logK_{eq}(Cu^{2+})$ | Method |
|---|---|---|---|
| Acetic acid | 4.76 | 1.8 | gl1 |
| Citric acid | 3.14, 4.77, 6.39 | 18.0 | gl1 |
| Lactic acid | 3.8 | 3.0 | con |
| Maleic acid | 1.83, 6.07 | 3.4 | gl1 |
| Malic acid | 3.40, 5.11 | 3.4 | gl2 |
| Malonic acid | 2.83, 5.69 | 5.0 | gl1 |
| *o*-Phosphoric acid | 2.12, 7.21, 12.67 | - | - |
| Succinic acid | 4.16, 5.61 | 2.6 | gl1 |
| Tartaric acid | 2.98, 4.34 | 3.2 | E |

Without being bound by theory, it is plausible that addition of chelating agent in a low pH environment results in inhibition of PPO activity, possibly in an irreversible fashion, thus inhibiting browning. It can be speculated that low pH results in minor conformational changes of the oxidase enzymes, exposing the copper atoms and allowing the chelating agent to bind and "capture" the copper atoms thus removing the atoms from their active sites. As a consequence, the plant PPO enzymes are inactivated, and since enzyme activity cannot readily be restored once the copper atoms have been removed from their active sites the inactivation may be considered irreversible. It can also be speculated that a similar mechanism results in deactivation of other metallo-enzymes such as e.g. peroxidase.

It is furthermore believed that the present invention results in a more efficient release of various soluble components by weakening and/or disrupting the cell walls enabling efficient isolation procedure of useful compounds (starch, fibres, and proteins) and a more efficient removal of unwanted compounds such as e.g. glycoalkaloids, phenolic compounds, polyphenols, chlorogenic acid, etc. Moreover, the low pH (e.g. from 2.0 to 4.5) value tends to prevent release of coloured compounds such as e.g. cyanidin and pro-anthocyanidins.

Without being bound by any theory the present inventors believe that the chelating agents inactivate PPO enzymes by chelating the copper ion which serves as a co-factor of such enzymes. Chelating agents may furthermore bind Fe-ions and thereby reduce the content of Fe(II)/chlorogenic acid complexes that may result from non-enzymatic browning after processing of the plant material.

The amounts of chelating agent used in the method of the invention ranges from 1-200 mM. Other preferred ranges are 2-150 mM, 3-150 mM, 4-150 mM 5-150 mM, 6-150 mM, 7-150 mM, 8-150 mM, 9-150 mM, 10-150 mM, 10-100 mM, 10-50 mM, 20-50 mM, 20-100 mM, 20-130 mM, 30-130 mM, 40-140 mM, 50-150 mM, 100-150 mM, 50-100 mM, etc. It is even possible to use smaller chelating agent concentrations than 1 mM but chances are that an insufficient PPO inactivation will be the result. Likewise, it is also possible to employ even larger concentrations of chelating agent than 200 mM but this is impractical on an industrial scale due to the cost. It will simply become expensive without being sufficiently efficient to use more than 200 mM chelating agent.

The methods of the present invention comprise a step to adjust the pH of the plant material to a value of from about 2.0 to about 4.5. In the context of the present invention this range is generally referred to as "low pH". Other pH ranges relevant to the process of the present invention are values of about 2.3 to about 4.5, such as about 2.7 to 4.5, about 2.7 to 4, about 3 to 4 or about 3.5 to 4. The pH adjustment may be performed prior to or after adding a chelating agent to the plant material, or the two steps may be performed simultaneously. Likewise, the pH adjustment may be performed simultaneously with or after the disruption of the plant material. The pH may be adjusted by adding any acid or base as is appropriate depending on the nature, form and concentration of the chelating agent. It is also possible to adjust the pH by mixing acidic and basic forms of the chelating agent in amounts suitable to obtain a desired pH, e.g. by forming a buffer, prior to adding the chelating agent to the plant material. In some cases, an acidic form of a chelating agent may be added in an amount insufficient to lower the pH to the desired range; in this case any acid may be added to lower the pH to fall within the range. When an acid is needed to adjust the pH it is preferred to use an inorganic acid, such as sulphuric acid or phosphoric acid.

According to the present invention, the chronology of the two process steps involving addition of chelating agent and adjustment of pH, does not appear to be of importance. What appears to be important is that the plant material is exposed to the combination of low pH and chelating agent relatively fast after onset of processing. Subsequently, chelating agent may optionally be removed fully or partly.

The low pH values, i.e. in the range of from about 2.0 to about 4.5, e.g. from about 2.3 to about 4.5, are thought to result in weakened cell walls thus facilitating extraction of various compounds such as e.g. proteins, fibres, phenolic compounds, etc. The low pH is furthermore thought to assist in the inactivation of the PPO enzymes in combination with chelating agents. The present inventors suspect that the combination of the low pH and the chelating agent may result in an irreversible inactivation of the PPO enzymes. It is however, not required in the process of the invention that the PPO enzymes are inhibited irreversibly. According to the present invention it is undesirable to employ pH values below about 2.0 since the likelihood of extracting undesired coloured compounds such as e.g. cyanidins and pro-anthocyanidins is increased. Also, some proteins may unfold or denature fully or partly under pH values below 1.5 or 2. It is also undesirable to employ pH values above about 4.5, for example above 6 or 7 since PPO enzymes may not become sufficiently inhibited. pH values above 7 may furthermore result in undesirable non-enzymatic browning reactions due to non-enzymatic degradation of some phenolic compounds.

In principle, any acid can be used for adjusting pH to a value falling within the range of the present invention in order to inhibit PPO enzymes in combination with addition of chelating agent(s). However, in connection with industrial plants comprising stainless steel equipment, some acids such as e.g. hydrochloric acid may be undesirable due to the potential corrosive effects of this acid. Sulphuric acids and phosphoric acids generally have the advantage of being relatively inexpensive and easily compatible with food applications. According to some embodiments of the present invention, addition of chelating agent may be sufficient in order to arrive at a pH value falling within the claimed range.

Low pH values are thought to cause partial protonation of the galacturonic acids in the pectin fraction of the cell walls. As a consequence, the cell wall structures are loosened and the extractability of cell wall associated compounds (such as e.g. protein, fibre, starch, flavour, etc.) and cations (such as e.g. potassium) is increased. The improved extractability of various soluble compounds is probably caused by acid induced swelling of fibres resulting in release of various cell wall bound compounds. The low pH is furthermore thought to assist in possibly irreversible inactivation of the PPOs in combination with complex binders.

In connection with some applications it may be desirable to fully or partly remove and/or neutralise the acid. Low pH of products according to the invention may e.g. interfere with later enzymatic applications and it may also interfere with the flavour of food products produced on basis of one or more products according to the present invention, particularly if relatively large amounts of such products are added to the food product.

Best results were achieved by exposing the disrupted plant material to the combination of low pH and sufficient amounts of chelating agent for a period of time of at least about one second, at least 10 seconds, at least 30 seconds, at least one minute, at least 5 minutes, at least 10 minutes, at least about 15 minutes, at least 30 minutes, or at least about one hour. Such short exposures to the combination of low pH and chelating agent will be practical for many applications. However, for some applications it may be practical to store the processed plant material for longer periods of time, such as e.g. at least one day, or at least one week, or at least one month before removing chelating agent and subjecting the material to further processing.

If the plant material is stored for longer periods of time (e.g. several weeks or months) it may be an advantage to store the material under relatively cool conditions such as not more than 25°C, not more than 20°C, not more than 15°C, not more than 10°C, not more than 8°C, about 5°C, about 0 to 5°C, alternatively 2 to 4°C. The plant material may also be stored at any subzero temperature, but this approach may not be practical in most situations, where the energy demand associated with cooling to subzero temperatures may not be desirable.

The term "fibre" as used in connection with the present invention denotes polymeric compounds that are resistant to enzymatic digestion in the digestive tract, i.e. in the stomach and small intestine and, thus, reach the large intestine essentially intact. As such, "resistant starch" may be embraced by the term "fibres" according to the present invention.

Upon ingestion, fibres have several beneficial physiological effects such as protection against colon cancer, improving glucose tolerance and insulin sensitivity, lowering plasma cholesterol and triglyceride concentrations, increasing satiety, and possibly even reducing fat storage.

Dietary fibres are the indigestible portion of plants that move food through the digestive system, absorbing water and making defecation easier. Dietary fibre consists of non-starch polysaccharides such as cellulose and many other plant components such as dextrins, inulin, lignin, waxes, chitins, pectins, beta-glucans and oligosaccharides.

Dietary fibres are usually divided according to whether they are water-soluble or not. Insoluble fibre possesses passive water-attracting properties that help to increase bulk, soften stool and shorten transit time through the intestinal tract. Soluble fibre usually undergoes metabolic processing in the gut via fermentation, yielding end-products with broad, significant health effects.

In the present description, the term "native protein" encompasses the protein fraction that is soluble in water. For the present invention, at least 80%, e.g. at least 90% or at least 95%, of the "native protein" is soluble in water. A protein is soluble in water if about 10 grams of the dry protein is completely or almost completely dissolved in 1 L water in less than one minute under gentle stirring. In certain solutions and under some conditions proteins will not fold into their bio-chemically functional forms. Temperatures above (and sometimes those below) the range that cells tend to live in will often cause proteins to fully or partly unfold or "denature". High concentrations of solutes, extremes of pH, mechanical forces, and the presence of chemical denaturants can do the same. In most cases denaturation of proteins is irreversible. Denatured protein is usually insoluble in water although it must be stressed that some native proteins, such as e.g. structural proteins are naturally insoluble in water. Fully or partly denatured protein does not have many applications in the food industry and is thus mainly used for e.g. animal feed.

Native potato proteins can be used e.g. in the paper industry, and in the pharmaceutical industry as e.g. anti-inflammatory agents. Furthermore, native potato protein has numerous applications in the food industry due to a large number of outstanding functional properties. In fact, potato proteins isolated using the methods of the present application have improved properties with respect to gelation properties, foaming properties, solubility properties, food safety, biological value, allergenicity, cost and organoleptic properties (taste, odour, colour, etc.)

In some aspects the present invention comprise steps in which the plant material is contacted with a cation-exchange chromatography resin to separate a non-binding fraction from a binding fraction. Ion-exchange chromatography is a process that allows the separation of ions and polar molecules based on the charge properties of the molecules. Ion-exchange chromatography can separate molecules based on coulombic (ionic) interactions. The surface of the stationary phase, or resin, displays ionic functional groups that interact with ions of opposite charge. This type of chromatography is further subdivided into cation-exchange chromatography and anion-exchange chromatography. In cation-exchange chromatography positively charged cations are bound to and retained by negatively charged functional groups displayed on the surface of the stationary phase.

Proteins, and other polymeric biomolecules, have numerous functional groups that can have positive and/or negative charges. These functional groups are typically of a weakly charged nature and therefore their charge will be dependent on the ambient pH. Thus, at low pH amine containing functional groups will be protonated and in a cationic form. At low pH values, most proteins are at their cationic form thus allowing for binding to the stationary phase of a cation-exchange chromatography resin. For all proteins, and many other polymeric biomolecules, may be defined an isoelectric point (pI); this is the pH value at which a given protein will have a net charge of zero. Below the pI a protein will be positively charged, and above the pI it will be negatively charged, and therefore proteins may generally be bound to or adsorbed by a cation-exchange chromatography resin when contacted with the resin at a pH below the pI. By subsequently changing the pH of the ambient liquid the net charge of the protein gradually becomes negative, and the protein will be desorbed (or "eluted") due to the electrostatic repulsion between the protein and the functional groups on the resin. Thus, an eluent solution may be a solution of a higher pH than employed for binding the protein. In the present invention it is preferred to elute bound protein from a cation-exchange chromatography resin using an eluent solution with a higher pH than the pH of the starting material contacted with the resin.

Proteins can also be eluted by displacing the positively charged protein bound to the stationary phase with other positively charged ions, i.e. by increasing the ionic strength of the ambient solution. Thus, for example proteins bound to an ion-exchange resin may be eluted from the resin by contacting the resin with a solution of e.g. NaCl at 1 M or higher concentration. Elution by increasing the pH and by increasing the ionic strength may also be employed simultaneously.

When several different species of proteins, each with different characteristics, such as the pI, are bound to the same ion-exchange resin it may be possible to selectively elute one or more of the bound species and thereby fractionate them from other bound species. Selective elution of different species may be obtained by gradually exposing the resin with bound proteins to increasingly strong elution conditions. For example, selective elution may be obtained by first increasing to one pH value higher than the binding pH, then to yet another higher pH etc. Such step-wise selective elution is also contemplated in the process of the invention. It is also possible to gradually increase the ionic strength of the eluent solution and thereby obtain selective elution. The two elution principles may also be combined.

It is generally preferred to elute proteins and other components adsorbed to an ion-exchange chromatography resin by increasing the pH to create ionic repulsion between the adsorbed component or protein and the charged groups of the resin.

In the process of the invention, the plant material is contacted with the ion-exchange chromatography resin. In the context of the present invention the term "contact" should be understood as bringing the plant material into contact with the chromatography resin thereby allowing the components, dissolved or suspended, of the plant material to interact with the surface of the chromatography resin. The plant material will typically comprise a liquid fraction when contacted with the resin. The contacting may be performed in any appropriate contacting vessel, for example a stirred or otherwise mixed tank, or the resin may be placed in a column serving as a contacting vessel when contacting the plant material with the resin. Columns with the resin may be of any type used in chromatography, such as packed or expanded bed columns, axial flow columns, or radial flow columns, and such columns may be operated according to any chromatographic principle. The resin need not be in the same type of contacting vessel in all steps of the process. For example, the contacting may be performed in a stirred tank while for subsequent elution steps the resin is transferred to a column. It is preferred to use a column as the contacting vessel for both the contacting step and elution steps.

When the chromatography resin is placed, e.g. packed, in a column it is possible to use gradients for elution. With a "gradient" is understood that the liquid phase of the column is subjected to a gradual change from one extreme condition to another extreme condition. For example, the first extreme condition may be represented by a binding or washing solution and the other extreme condition by an eluent solution of the highest pH or ionic strength so that at the first extreme condition the liquid phase applied to the column corresponds to 100% of the former solution and the other extreme condition corresponds to 100% of the latter solution. The gradient may be created by proportionally mixing the two solutions, so that the liquid applied to the column has an increasing proportion of the latter solution. The gradient may be a simple linear gradient with a constant increase (over time) in the proportion of the eluent solution, or the gradient may follow a more complex pattern. It is also possible to employ step-wise changes in condition where for example a washing solution is first applied to the column after contacting the plant material with the resin, then a first eluent solution is applied for a given amount of time, then a second eluent solution and so forth.

The chromatography resin may be of any type known in the art for different types of chromatography. For example, the resin may be of a densified type for expanded bed chromatography, a so-called soft gel for liquid chromatography, a resin for high-performance or highpressure liquid chromatography (HPLC). It is, however, preferred to employ a resin of a high capacity designed for operation at high flow-rates, such as for examle Sepharose Big Beads, Sepharose Fast Flow, Sepharose XL. The Sepharose brand of chromatography resins is marketed by GE Healthcare (http://www.gehealthcare.com), and appropriate resin types are described in detail in the handbook "Ion Exchange Chromatography & Chromatofocusing, Principles and Methods" published by GE Healthcare. Other types of adsorbent material employed in ion-exchange separation are, however, also considered to be within the definition of a "chromatography resin" in the context of the invention. Such adsorbent material comprises charged membranes and so-called chromatographic monoliths.

Appropriate operating parameters, such as linear and/or volumetric flow-rates, appropriate diameter and height of a chromatography column, amount of chromatography resin needed for a given process, equilibration and regeneration of the resin, buffering capacity of material contacted with the resin etc. are likewise described in the handbook "Ion Exchange Chromatography & Chromatofocusing, Principles and Methods" and other reference manuals well-known to the skilled person.

In order to remove the chelating agent from the protein, the non-binding fraction or fractions containing the majority of the chelating agent may be removed from the bound fraction by washing using a solution with a pH and ionic strength similar to the loaded fraction. The generated fraction(s) often also contain various other components such as e.g. glycoalkaloids, colour precursors, phenolic compounds, chlorogenic acid, etc. which, according to certain embodiments may be turned into valuable products rather than being discarded.

In connection with the present invention, other chromatographic methods may also be employed such as e.g. gel permeation chromatography, anion-exchange chromatography, hydrophobic interaction chromatography, affinity chromatography, etc. It will however appear from the following that particular advantages are associated with cation-exchange chromatography.

## *Preferred embodiment*

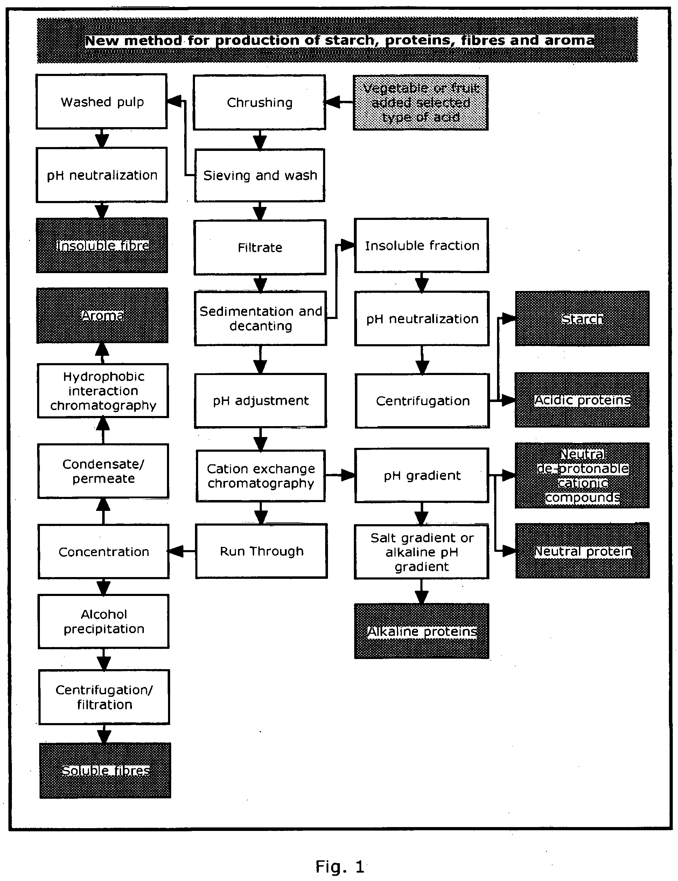

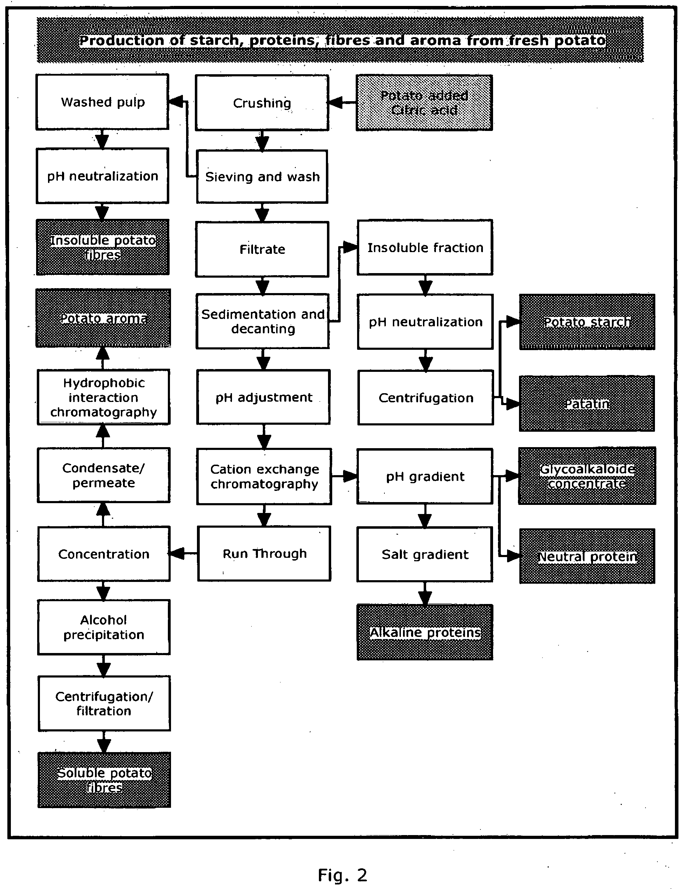

The invention will now be described in the following using potato as an exemplary plant material. It follows that also other crops may be processed using the processes. Furthermore, the processes as described below shall not be seen as limiting embodiments - rather they should be viewed as the currently preferred embodiment of the present invention. The description below refers to the Figures showing schematic flow diagrams for the processes where each process step is generally represented with a box labelled according to the process. Likewise, starting or end products, as well as intermediary products, are also identified by appropriately labelled boxes. Fig. 1 shows a general illustration of the integrated process set-up, whereas the integrated process set-up shown in Fig. 2 is specific for the processing of potatoes.

The composition of potatoes will vary with the season but typically raw potatoes contain approximately from 15-25 g/kg protein, from 150-200 g/kg carbohydrates and about 75% moisture content as the major constituents; the carbohydrates will be mainly starches with smaller amounts of other types of fibres as discussed above. The water soluble fraction of the protein will typically contain from 30-40% storage protein generally known as "patatin" as well as other proteins, such as enzymes and protease inhibitors. Other constituents may comprise minor components, such as glycoalkaloids, flavour components etc. Therefore, the potato represents an example of a plant material with a composition typical for many plant materials, and observations and conclusions made for the processing of potatoes will apply to plant materials of other origin as well.

The invention may be performed at any scale of operation. In particular, the processes of the invention are suited for industrial scale processing, e.g. where 100 tonnes/h or more are processed.

The potatoes are first grated or shredded (Fig. 1 and 2, "Crushing"), preferably in the presence of chelating agent (e.g. citrate at a concentration of 1-200 mM, e.g. 20 mM) and a low pH value (from 2.0 to 4.5, e.g. from 2.3 to 4.5, e.g. from 3.5 to 4.0), although these parameters may also be adjusted soon after grating. Alternatively, the potatoes may be disrupted, e.g. grated or shredded, under low pH conditions, so that the pH is lowered to about 2.0 to about 4.5 with a later addition of the chelating agent. The process will normally employ phosphoric or sulphuric acid, which is employed in a concentrated form or in diluted solution when added to the plant material to adjust the pH to the desired range. It is also possible to perform the steps of adding the chelating agent and adjusting the pH after removal of e.g. starch from the plant material. A typical industrial grater may be capable of disrupting 75 tonnes/h; at any given time during the grating, the grater will normally hold about 10 kg of potatoes being disrupted. Usually, water is added in connection with the grating process, or plant juice may be recirculated, although many plant materials inherently contain sufficient amounts of water for the disruption step. The addition of the chelating agent and the adjustment of the pH inhibit browning, especially enzymatic browning caused by PPO enzymes, of the plant material.

The grated potatoes can readily be separated into (i) a liquid fraction comprising the soluble potato components and (ii) a fraction comprising the insoluble potato components. This solid-liquid separation (Fig. 1 and 2, "Sieving and wash") may be performed using a sieve or filter capable of separating particles of a desired size, e.g. 500 $\mu$m, 250 $\mu$m or 125 $\mu$m, from the liquid fraction.

The description below will first focus on the liquid fraction and recovery of components of interest from this fraction, such as soluble fibres, native protein, patatin, neutral protein, alkaline protein, alkaline peptides, glycoalkaloids, aroma components, phenolics, using the processes of the invention. The processing of the solid fraction, yielding insoluble fibre products, lignin enriched fibre products, cellulose enriched fibre products, according to the invention will be described subsequently.

*Liquid potato fraction*

The liquid potato fraction comprises potato proteins (both in solution, sedimented proteins, and proteins which may be sedimented), soluble fibres, glycoalkaloids, flavours, chelating agent, phenolic compounds, etc. The liquid fraction may also contain starch, or the starch may be removed from the liquid fraction and further refined using various techniques like low speed centrifugation or hydro cyclone sedimentation prior to adding the chelating agent and/or adjusting the pH. The, optionally starch free, liquid potato fraction having a low pH may be processed directly, but it may also be stored in containers for days, weeks or even months. In connection with long term storage, a protein component may sediment gradually; as disclosed above the sedimentation may be promoted by further adjusting the pH. Regardless of whether the pH is adjusted further, long term storage is not required to sediment protein which may sediment within a short period of time. In connection with storage, a particularly preferred chelating agent is citrate/citric acid due to its preserving properties. The sedimented protein product comprises a mixture of pectin and native potato protein commonly referred to as "patatin". Glycoalkaloids normally do not precipitate under these conditions and the sedimented product may simply be washed with an aqueous solution at low pH after recovery of the sedimented product in order to remove residual glycoalkaloids, chelating agent, etc.

The sedimented protein product is a valuable native potato protein product having the advantage of being isolated using a simple and inexpensive process. In a preferred embodiment, the sedimented protein is recovered from the liquid fraction by filtration (Fig. 1 and 2, "Sedimentation and decanting"). For example, the sedimented protein may be recovered using a plate and frame filter. The sedimented protein may also be recovered along with the starch fraction using a three-phase centrifuge, which is capable of separating starch and sedimented protein in distinct fractions. Using this unit operation starch is isolated as a high-density fraction, precipitated protein fraction as an intermediate-density fraction and the remaining liquid fraction as a low-density fraction.

The sedimentation of the protein will generally depend on the isoelectric point (pI) of the protein, and sedimented protein will typically be protein with pI values within the range of about 4.5 to about 5.2. Sedimentation of the proteins can further be improved by adjusting the pH to elevated values of 9-10 or higher to dissolve the proteins followed a fast, e.g. immediate adjustment of the pH to about 2.0 to 5.2, for example within the range of about 4.5 to 5.2. It is preferred that the step of increasing the pH to a value of 9-10 or higher followed by the decrease of pH to preferably between about 4.5 to 5.2 is included in the process. Moreover, it is also preferred that the liquid fraction comprising the protein product to be isolated as a sedimented protein component is separated into an upper, clear phase and a lower, opaque or milky phase. The protein component of the lower phase, i.e. the sedimented protein, is then redissolved by increasing the pH to a value of 9-10 or higher and then precipitated by decreasing the pH to within the range of about 4.5 to 5.2. The upper phase and the lower phase may be separated using decantation.

The protein component precipitated from the lower phase may subsequently be separated using a solid-liquid separation, such as a filter, e.g. a plate-and-frame filter, or a centrifuge, e.g. a disk-stack or a tubular bowl centrifuge (decanter).

Regardless of the processing history of the sedimented protein, the fraction containing the sedimented protein may be subjected to a further step to prevent browning of the protein product. A further step to prevent browning may comprise treating the protein product with a decolourising agent. For example, a liquid comprising the sedimented protein may be treated by adding a bleaching clay to the liquid. The decolourising agent may be added between any of the processing steps, e.g. before lowering the pH to a value between 4.5 to 5.2, or in case a step is included to raise the pH to between 9-10 or higher, before or after this step; in this latter case the decolourising agent may also be added after adjusting the pH to a preferred value of between 4.5 and 5.2. When a particulate decolourising agent, such as a bleaching clay, is used this is preferably removed before reprecipitating and isolating the protein product, e.g. by filtration or sieving, or by centrifugation.

While the sedimented protein product is not as pure as protein products obtained in a chromatographic method the purity is sufficient for many industrial applications. Especially, bulk protein originating from potatoes is considered non-toxic for human or animal consumption. For example, the patatin protein product manufactured in this embodiment of the invention has excellent foaming and gelling properties, which properties are desirable in many food applications. Further processing of the patatin fraction may involve solubilising (Fig. 1 and 2, "pH neutralization") the filter cake in a liquid with a pH above the pI of the protein (e.g. 5.5), filtering to remove insoluble contaminants and spray drying this solution to produce a dry patatin product.

If the patatin fraction needs to be further purified, the sedimented protein fraction in the filter cake can likewise be solubilised followed any desired processing steps, such as filtration, concentration by e.g. ultrafiltration and diafiltration, chromatographic purification etc.

The liquid fraction resulting from the solid-liquid separation of the grated potato material may also be subject to protein purification using cation-exchange chromatography (Fig. 1 and 2, "Cation-exchange chromatography"). Chromatographic purification may be performed directly on liquid fraction from the grating step, the liquid fraction from the three-phase centrifugation, in case this unit operation is employed, or the filtrate produced in the step to remove the sedimented protein may be used as a starting material for chromatographic purification. Likewise, the clear, upper phase resulting from a separation of the liquid fraction into the upper and a lower phase for the isolation of the sedimented protein described above, may also be subjected to cation-exchange chromatography.

Either the liquid fraction from the grating step, or the filtrate or the upper phase may be contacted with a cation-exchange chromatography resin; Fig. 1 and 2 both illustrate the embodiment where the filtrate constitutes the starting material for the cation-exchange chromatography. It is preferred to employ a resin which, when packed in a column, especially of either the axial flow or radial flow type, will not be clogged by any particulate material still remaining in the liquid following the respective filtration steps. Suitable resins are those available under the trade names Sepharose Big Beads, Sepharose Fast Flow, Sepharose XL (from GE Healthcare); these are preferably derivatised with a strong cation-exchange ligand, such as that known as "SP". Other processing parameters, such as column diameter and length, amount of resin may readily be decided by the skilled person in consideration of the amount of liquid to process. The flow-rate may be chosen from the length of the column, the type of resin, the nature of the liquid applied in order to prevent formation of an excessive back-pressure. The flow-rate may also be chosen to optimise binding capacity.

It is preferred that the pH of the liquid fraction or filtrate is adjusted (Fig. 1 and 2, "pH adjustment") to a value of from 3.0 to 5.5, e.g. 3.5, prior to the chromatographic treatment. The cation-exchange chromatography resin will have been equilibrated to this same pH value, using e.g. a citrate or acetate buffer of from 10 to 50 mM concentration, prior to contacting the liquid fraction or filtrate with chromatography resin.

Under these low pH conditions, (positively charged) proteins and glycoalkaloids will bind to the chromatography resin. Following application of the liquid fraction or filtrate, the chromatography resin will normally be washed with the equilibration buffer.

Subsequently, an eluent solution may be applied (Fig. 1 and 2, "pH gradient" and "Salt gradient or alkaline pH gradient") to elute fractions comprising glycoalkaloids of a high concentration and purity. By using an eluent solution with a pH of about 8 (using for example a 10-50 mM phosphate buffer), e.g. in a gradient type elution (Fig. 1 and 2, "pH gradient"), the glycoalkaloids are typically eluted shortly after the pH in the column starts to increase before proteins bound to the resin are eluted (such fractions may have a "milky" appearance due to a high concentration of glycoalkaloids).

By obtaining high concentration glycoalkaloid fractions, it is thus possible to turn this into a valuable product, as glycoalkaloids have a number of pharmaceutical, herbicidal, and cosmetic applications. Glycoalkaloids found in potatoes commonly comprise solanidine, $\alpha$-solanin, $\beta_1$-solanin, $\beta_2$-solanin, $\gamma$-solanin, $\alpha$-chaconine, $\beta_1$-chaconine, $\beta_2$-chaconine, $\gamma$-chaconine and others. The glycoalkoaloids may be obtained in a dry form from the eluate using e.g. spray drying. Further purification of the glycoalkaloides may be performed by increasing the pH of the fraction to above about 6.0 where the glycoalkaloides precipitate but proteins still are soluble. The precipitated glycoalkaloides can then be isolated by any solid-liquid separation technique like e.g. centrifugation or filtration prior to drying by e.g. floating bed drying, spin-flash drying or similar.

Following selective elution of the non-protein compounds, e.g. glycoalkaloids, a protein fraction, "neutral protein", may be eluted from the cation-exchange chromatography resin as the pH further increases in the column during elution with the eluent solution of pH 8 (Fig. 1 and 2, "pH gradient"). These eluted fractions comprise high concentration of neutral potato proteins of a high purity and with a wide range of excellent functional characteristics.

It may now be possible to elute a further protein fraction from the cation-exchange chromatography resin by applying yet another eluent solution of a still higher pH, such as 12 (Fig. 1 and 2, "Salt gradient [or alkaline pH gradient]"). The compounds thus eluted generally comprise alkaline/basic proteins and peptides. The alkaline proteins/peptides are thought to form part of the insoluble "pulp" fraction resulting from industrial processing of potatoes. By means of the processes according to the present invention, it is possible to extract and isolate theses proteins, of which the majority are thought to be associated with the cell wall. Without being bound by theory it is thought that the acidic extraction conditions result in extraction of these proteins that would otherwise be firmly attached to the cell wall material. It has previously been reported that such alkaline/basic potato proteins have antimicrobial effects and these proteins may therefore be used as antimicrobial agents within e.g. the pharmaceutical industry. Basic potato proteins are furthermore excellent for use in e.g. the paper industry in particular as an inexpensive replacement of casein.

If a dry and/or more concentrated protein product from any of the above elution steps is desired, the eluted fractions may be concentrated by e.g. ultrafiltration or diafiltration, and/or dried by e.g. freeze drying, spin flash drying, spray drying, etc.

Instead of employing the gradient type elution described above it is also possible to employ any number of eluent solutions of relevant pH values, such as e.g. a series of eluents of pH 6, 7, 8 or other relevant values which solutions may be applied by changing between the eluent solutions in a step-wise fashion, so that the change from one condition to the next is effected by an instantaneous change from one eluent solution to the next, thus creating a steep gradient within the column.

After contacting the liquid fraction from the grating step, the liquid fraction from the optional three-phase centrifuge or the filtrate from the removal of sedimented protein with the cation-exchange chromatography resin a liquid fraction representing non-bound material will result (Fig. 1 and 2, "Run Through"). This liquid fraction may be referred to as the run-through fraction, and contains soluble potato fibre, flavours, phenolics, and chelating agent. These components will thus still be present in the fluid fraction that has passed through the column - and to some extent in the washing buffer that has been used for washing the column before eluting proteins and glycoalkaloids.

This fluid fraction, the run-through fraction, that is depleted in proteins and possibly to some extend also glycoalkaloids may be concentrated using e.g. evaporation, ultrafiltration and/or diafiltration (Fig. 1 and 2, "Concentration") in order to concentrate soluble fibres, etc. Ultrafiltration may be performed with a membrane with a cut-off value of e.g. 10 kDa, 20 kDa or 100 kDa.

The permeate (Fig. 1 and 2, "Condensate/permeate") resulting from concentration of fibres by ultrafiltration (or evaporation or diafiltration) may subsequently be subject to hydrophobic interaction or reverse phase chromatography (Fig. 1 and 2, "Hydrophobic interaction chromatography") in order to isolate the potato flavour compounds. Flavour may be eluted from the hydrophobic interaction or reverse phase column by means of an organic solvent, e.g. alcohol. This approach for removing potato flavour is very efficient - after passing the liquid fraction through the hydrophobic interaction column, all detectable potato flavour is removed. This purification step enable recycling of process water devoid of potato flavour/odour/aroma.

The concentrated fibre fraction from the ultrafiltration/diafiltration step is preferably subsequently subjected to alcohol precipitation (Fig. 1 and 2, "Alcohol precipitation") in order to precipitate water soluble fibres. Various alcohols such as e.g. ethanol, propanol, etc. may be employed for this purpose, although isopropanol is preferred. The concentration of the alcohol may be about 10-80%, for example 50%. Potato flavour, phenolic compounds, etc. are not normally precipitated by the alcohol and the precipitated fibre product is thus of high purity. The precipitated fibres may be dried in order to remove residual alcohol. The precipitated fibres may also be recovered by centrifugation or filtration (Fig. 1 and 2, "Centrifugation/filtration").

The purified soluble fibres constitute a product of high quality and functionality. The soluble fibres obtainable from potatoes in this process typically comprise pectin or hemicelluloses or a mixture thereof.

The fluid fraction that has been passed through the hydrophobic interaction column, and to some degree the eluate from subsequent washing step, comprise chelating agent, phenolic compounds, and salts. These compounds can be isolated by e.g. anion-exchange chromatography (not shown in Fig. 1 or 2). Chelating agent thus isolated may be reused for inhibiting enzymatic browning. Phenolic compounds thus isolated constitute a valuable anti-oxidative product with a wide range of applications. In normal production facilities such compounds are considered waste products of little or no value.

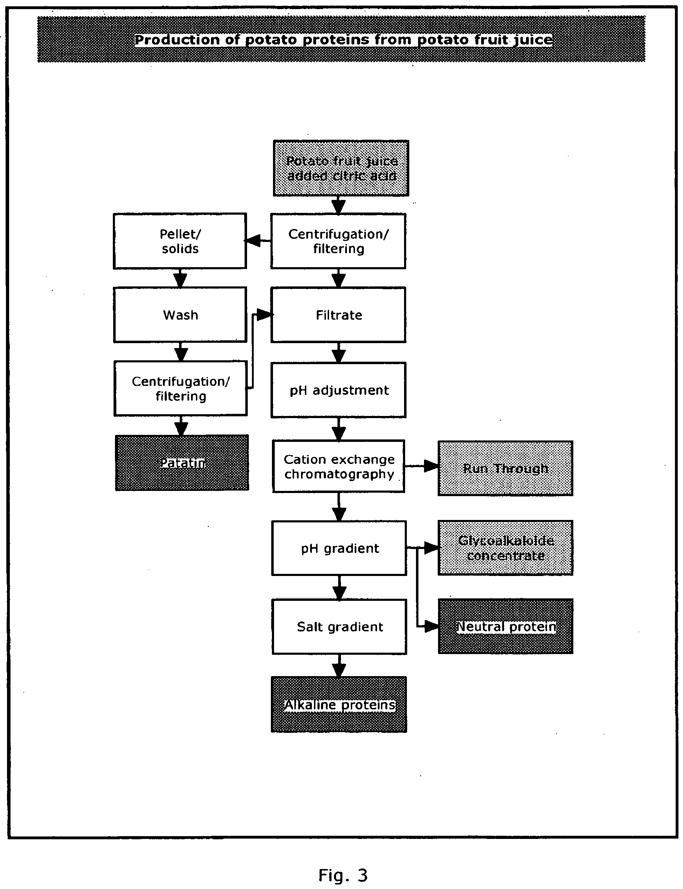

The processes for the manufacture of proteins from the liquid fraction with soluble components from the grated potatoes is further illustrated in Fig. 3.

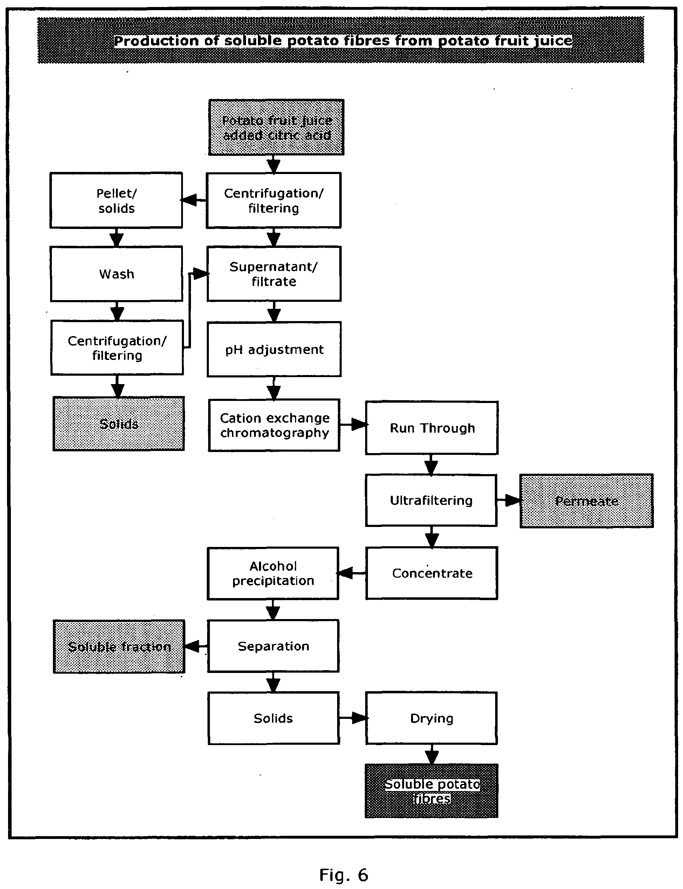

One embodiment of the process for the manufacture of soluble potato fibres is further illustrated in Fig. 6.

*Insoluble potato fraction*

The insoluble, or solid, potato fraction is the fraction resulting from the solid-liquid separation, i.e. the filter cake (Fig. 1 and 2, "Washed pulp"), after grating the potatoes. This insoluble fraction comprises primarily insoluble potato fibres and starch; it will normally also contain residual water and other residual components from the previous process.

This fraction may be subjected to washing steps in order to remove and/or dilute acid, chelating agent, etc. The liquid fractions resulting from such washing steps comprise residual amounts of protein, soluble fibres, glycoalkaloids, flavour, chelating agent, etc. These fractions may conveniently be passed through the purification steps as described above in connection with the liquid fraction.

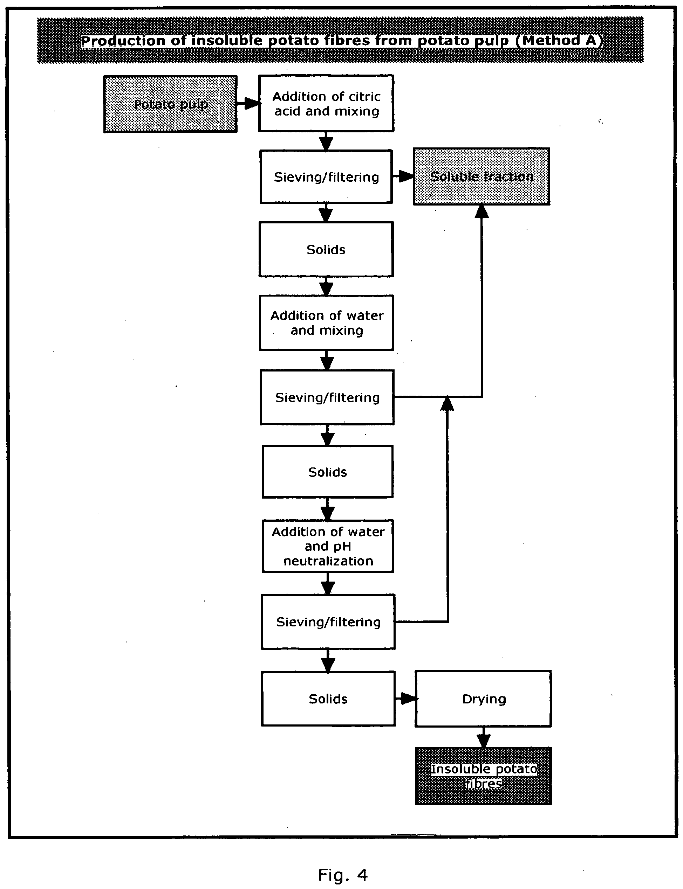

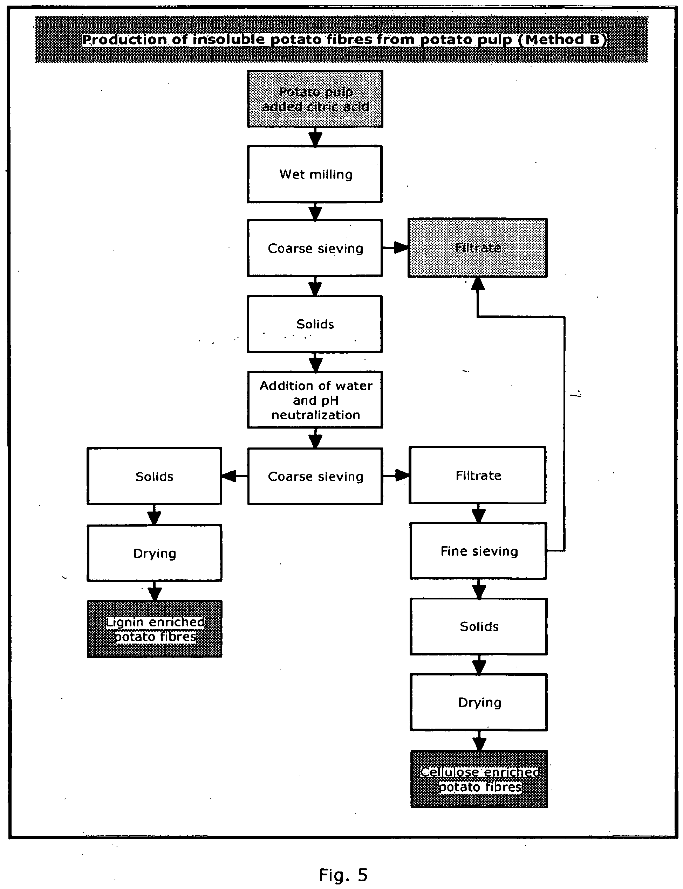

The washed, solid fraction comprising insoluble fibres may subsequently be dried to represent a product of insoluble fibres. A schematic diagram of this process is illustrated in Fig. 4. However, it is preferred that the washed fraction of insoluble potato fibres is further processed to be fractioned into a fraction comprising cellulose enriched potato fibres and a fraction comprising lignin enriched potato fibres; a schematic diagram of this embodiment is illustrated in Fig. 5. For this further fractionation, the filter cake of the washed, insoluble fibres is resuspended in water (e.g. at 50% by weight of the filter cake in water), and the pH is adjusted to a value of 5.8 or higher, preferably 6 (Fig. 5, "Addition of water and pH neutralization"). This suspension is then screened or filtered (Fig. 5, "Coarse sieving") through a filter to separate coarse grained particles (i.e. of a size larger than about 500 $\mu$m) from fine grained particles (i.e. of a size smaller than about 500 $\mu$m); it is preferred to employ a centrifugal sieve with a mask size of 500 $\mu$m to capture the course grained particles followed by a centrifugal sieve or the like with a mask size of e.g. 40-60 $\mu$m to capture the fine grained particles from the filtrate from the removal of the coarse grained particles.

The coarse grained fibres generally represent a lignin enriched fraction, and the fine grained fibres generally represent a cellulose enriched fraction. Either fraction may be subjected to further filtration and washing steps, as desired, to provide a product of a desired purity. Following a final washing step the fibre fraction (coarse or fine grained) may be dried by flash drying, spin-flash drying, freeze drying or other well-known processes to yield a dry fibre product.

The lignin enriched fraction tends to comprise coloured polyphenolic compounds and this fibre fraction is thus most suitable for use in food products where lack of discolouration is not an essential requirement or in feed applications. The lignin/polyphenol in the lignin enriched fibre fraction is most likely primarily derived from the potato peel.

The cellulose enriched potato fibre fraction is a product with excellent functional characteristics. The product has no or almost no discolouration and no or almost no potato flavour/odour. The product furthermore has excellent water binding characteristics. The cellulose enriched potato fibre fraction may therefore be used in food applications, such as production of low-calorie foods and diet foods, taking advantage of the water binding properties.

In conclusion, the present invention thus provides a complete, integrated process set-up for isolating potentially valuable components from potato as well as a system for recycling of water, alcohol, chelating agent, etc. In particular, it is clear that a process stream that may appear to be a "waste" stream in one process may be used as a starting material in another process to recover a valuable product from the stream. Environmental concerns associated with potato processing can thus be significantly reduced or even almost eliminated. This system is illustrated in the Figures.

It appears from above that in addition to a significant reduction of environmental concerns in connection with crop processing, the present invention furthermore provides means for turning products of low or no value into products of high value, quality, and functionality.

It will furthermore be clear from the above description that each process as well as the integrated process set-up may readily be adapted for the processing of other plant material than potatoes.

Finally, important aspects relate to the use of the products that may be obtained by the methods according to the present invention. Such uses include use in preparation of e.g. food products, pharmaceutical products, cosmetic products, as well as uses in other industries such as e.g. the paper industry and the textile industry.

It should be noted that embodiments and features described in the context of one of the aspects of the present invention also apply to the other aspects of the invention.

It should furthermore be noted that the term "obtainable by" also covers the term "obtained by" - and the two terms can thus be used interchangeably.

All patent and non-patent references cited in the present application, are hereby incorporated by reference in their entirety.

The invention will now be described in further details in the following non-limiting examples.

**Examples**

Example 1 - *Evaluation of the effect of various chelating agents and pH values on potato plant phenol oxidase (PPO) activity*

200 gram peeled potato was cut into pieces and blended with approximately 0.3 L 0.2 M acetate buffer pH 4.0 for 3 min. The homogenate was filtered through a cheese cloth and the filtrate centrifuged at 10000 g for 10 min at 4°C. During the following 60 min, the supernatant was continuously mixed with ammonium sulphate to a final concentration of 70% using magnetic stirring at room temperature. The precipitate was collected by centrifugation at 10000 g for 10 min at 4°C. The pellet was re-suspended in 5 mL milli-Q water. This slurry is referred to as the polyphenol oxidase (PPO) crude extract.

Effect of acetic acid, citric acid concentration, and pH was tested by making an enzyme reaction mixture consisting of PPO enzyme crude extract diluted ten times (1:9) in various buffers (0.025 mL PPO crude extract to 0.225 mL buffer). The activity of the reaction mixtures was measured after a holding time of 10 min in a spectrophotometric PPO assay.

The spectrophotometric PPO assay was performed by mixing 0.15 mL enzyme reaction mixture with 1.35 mL substrate (0.0001 M chlorogenic acid in 0.02 M phosphate buffer pH 7.0) and 1.00 mL assay buffer (0.2 M phosphate buffer pH 7.0). Loss of absorbance at 326 nm correlates to the degradation of chlorogenic acid and was measured over a time period of 3 min. After subtracting the slope of the degradation curve of 1.35 mL substrate diluted with 1.15 mL assay buffer (non-enzymatic degradation of chlorogenic acid), the negative slope of the first linear part of the absorption curve was used as estimate of the enzyme activity. Results given as the relative remaining PPO activity (%) are calculated as the activity of the sample times 100 divided by the activity of the crude extract diluted ten times by assay buffer.

Enzyme reaction mixtures were made with citric acid buffer or acetate buffer in 0.01 or 0.10 M concentrations and adjusted to various pH values between 3.1 and 5.5.

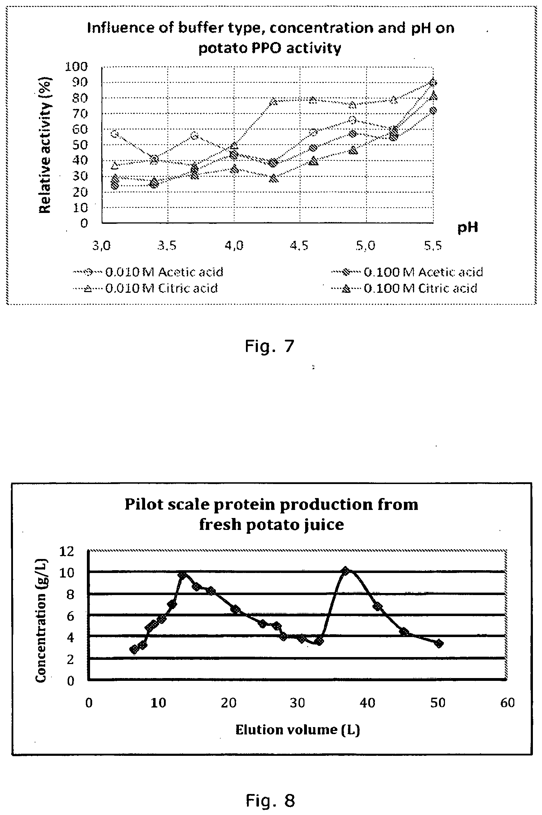

The results are shown in Table 2 as well as in Figure 7.

Table 2: Effect of acetate and citrate on irreversible inactivation of PPO from potato. Enzyme activity assay was performed at pH 7.0.

| pH | 3.1 | 3.4 | 3.7 | 4.0 | 4.3 | 4.6 | 4.9 | 5.2 | 5.5 |
|---|---|---|---|---|---|---|---|---|---|
| 0.010 M Acetic acid | 57 | 41 | 56 | 44 | 39 | 58 | 66 | 60 | 90 |
| 0.100 M Acetic acid | 24 | 25 | 34 | 43 | 38 | 48 | 57 | 55 | 72 |
| 0.010 M Citric acid | 37 | 40 | 37 | 50 | 78 | 79 | 76 | 79 | 91 |
| 0.100 M Citric acid | 29 | 27 | 31 | 35 | 29 | 40 | 47 | 59 | 82 |

The results in Table 2 and Figure 7 indicate that both acetate and citric acid can be used for potato PPO inactivation and that pH values below 4.5 are preferred for irreversible inactivation within 10 min. When low concentration of citric acid is used, the pH should preferably be below 4.0.

Example 2 - *Effect of different chelating agents on potato and avocado PPO activity, respectively*

Potato PPO crude extract was prepared as in Example 1 and tested in a similar setup using the same assay.

Avocado PPO crude extract was produced as follows: 100 g fresh peeled avocado was blended with 150 mL 0.2 M acetate buffer pH 4.0 for 3 min. The homogenate was filtered through a cheese cloth and the filtrate centrifuged at 10000 *g* for 10 min at 4°C. The supernatant was collected and during a period of 60 min ammonium sulphate was continuously added to a final concentration of 20% using magnetic stirring at room temperature. The precipitate was removed by centrifugation at 10000 g for 10 min at 4°C. The protein precipitation was thereafter repeated as above with further addition of ammonium sulphate to a final concentration of 40% saturation. After centrifugation the resulting protein precipitate pellet was redissolved in 5 mL milli-Q water. This solution is referred to at the avocado PPO crude extract.

The avocado PPO activity was measured in an assay similar to the one used for potato PPO but changing the substrate to 0.0001 M dopamine instead of chlorogenic acid. Avocado PPO activity was measured as dopamine degradation over time and quantified by an increase in the 280 nm absorbance as a result of increased concentration of dopamine degradation products in the assay mixture.

All inactivation tests were performed by ten times dilution (1:9) of the PPO crude extracts in various chelating agent buffers at pH 3.5 using a holding time of 10 min. The activity measurement was performed at pH 7.0. The results of the test are shown below (Table 3).

Table 3: Effects of various chelating agents on the activity of potato PPO on degradation of chlorogenic acid and avocado PPO on degradation of dopamine. All chelating agents were tested at pH 3.5 using concentrations of 0.100 M acid and holding times of 10 min. Inactivation with 0.010 M acetate (potato PPO) and citrate (potato and avocado PPO) were also tested. Assay pH was 7.0.

| Chelating agent | Potato | Avocado |
|---|---|---|
| 0.010 M Acetic acid | 41 | - |
| 0.100 M Acetic acid | 25 | 105 |
| 0.010 M Citric acid | 40 | 66 |
| 0.100 M Citric acid | 27 | 30 |
| 0.100 M Maleinic acid | 26 | 121 |
| 0.100 M Oxalic acid | 21 | 43 |
| 0.100 M Succinic acid | 19 | 118 |

The results show that all chelating agents tested were capable of reducing the potato PPO activity at pH 3.5 within a holding time of 10 min giving residual activities in the range from 19 to 27% of the initial PPO activity using 0.100 M acid concentration. Reducing the concentration of citric acid and acetic acid to 0.010 M resulted in removal of approximately 60% of the initial PPO activity.

Avocado PPO activity was not decreased by 0.100 M acetic acid, maleinic acid or succinic acid at pH 3.5 within the tested holding time of 10 min. On the other hand citric acid and oxalic acid had substantial impact on the residual PPO activity. Citric acid reduced the activity of avocado PPO by 34 % and 70 % using 0.010 and 0.100 M concentrations, respectively. Oxalic acid at 0.100 M reduced the potato PPO activity by 57%.

Example 3 - *Effect of acetic acid and citric acid on the activity of PPO from apple, avocado, banana, champignon, and potato*

Isolation of PPO enzymes from potato and avocado were performed as described in Examples 1 and 2.

PPO from banana was produced using the procedure described for isolation of avocado PPO crude extract (Example 2) using 140 g banana and 0.200 L acetic acid buffer (0.2 M pH 4.0). The final protein precipitate (40% ammonium sulphate) was suspended in 5 mL milli-Q water.

PPO from apple was prepared from 150 g fresh apple blended with 0.200 L 0.2 M acetic acid buffer pH 4.0. The mash was filtered through a vacuum filter and the filtrate kept at ice when possible. Five 1 mL aliquots of filtrate were purified through a 0.5 mL sephadex DEAE A-25 anion exchanger on acetate form. The run-through fraction (4.3 mL) was collected and used as apple PPO crude extract.

PPO crude extract from champignon was prepared as described for apple PPO crude extract using 150 g fresh champignon and 0.200 L 0.2 M acetic acid buffer pH 4.0.

Inactivation trials were performed as described in Example 1 by diluting the enzyme crude extract (1:9) with 0.100 M or 0.010 M acetic acid or citric acid at pH 3.5. After 10 min holding time the remaining PPO activity was determined using similar assay conditions as in example 1.1 for PPO from apple, champignon, and potato, but changing the substrate to 0.0001 M dopamine when assaying residual PPO activity from avocado and banana.

Degradation of dopamine by PPO resulted in an increase in the UV280 nm absorption. Therefore the PPO activity of avocado and banana was calculated as the initial positive slope of the curve measuring UV280 nm absorption as function of time. Similar to the assay using chlorogenic acid as substrate, the measured values was corrected for non-enzymatic degradation of the substrate, and the results are given as % remaining PPO activity relative to the activity of the crude extracts.

Table 4: Effect of acetic acid and citric acid on PPO activities from apple, avocado, banana, champignon, and potato. Inactivation was performed using 0.100 M acid at pH 3.5 for 10 min, and assay was performed using chlorogenic acid as substrate for PPOs from apple, champignon, and potato and dopamine as substrate for PPOs from avocado and banana. Assay was performed in phosphate buffer pH 7.0 except for apple PPO where the assay was run in acetic acid buffer at pH 4.0.

| | Apple | Avocado | Banana | Champignon | Potato |
|---|---|---|---|---|---|
| Acetic acid | 18 | 122 | 91 | 9 | 25 |
| Citric acid | 5 | 30 | 67 | 0 | 27 |

The results in Table 4 show that the degree of irreversible inactivation of PPO depended on the type of acid used as well as the source from which the PPO enzyme was derived. It is thus seen that acetic acid was not able to inactivate avocado PPO whereas citric acid reduced avocado PPO activity to 30% of the initial activity. Approximately 10% of the banana PPO activity was inactivated by acetic acid compared to 33% inactivation by citric acid. Around 75% of potato PPO was inactivated by both chelating agents. Apple and champignon PPO were very sensitive towards treatment with acetic acid and citric acid reducing the residual apple PPO activity to 18% and 5% and champignon PPO activity to 9% and 0%, respectively.

Examples 1-3 thus show that there may be differences in the efficiency for irreversibly inhibiting PPO activity in various crops using different chelating agents.

However, as judged from the lack of discolouration of the final products (proteins, fibres, starch, etc.) it appears that it may not be required that close to 100% of the PPO enzyme activity is inhibited. The reason why the present invention works efficiently even though the residual PPO enzyme activity is less than 100% such as e.g. 20%, 30%, 40%, 50%, 60%, 70%, 80%, or 90% is the fact that colour precursors, i.e. phenolic compounds are also efficiently removed during processing and isolation of these products.

Example 4 - *Production of potato protein from fresh potato*

500 g fresh potato was crushed in a kitchen blender with 500 mL 0.100 M citric acid. The homogenate was sieved through a 0.5 mm sieve and the pulp fraction washed twice with water and filtered through a 0.5 mm sieve. The insoluble starch fraction was removed from the filtrate by decanting. The pH of the potato juice was adjusted to 3.5 and the potato juice was applied onto a 0.02 L cation exchange column (SP Sepharose FF, XK 16/20) regenerated by 0.02 M phosphate buffer, pH 8.3 supplemented with 1 M NaCl and equilibrated with 0.02 M acetate buffer, pH 3.0. After applying the sample onto the column unbound material was flushed out of the column using 0.01 M acetic acid, pH 3.5. Proteins were eluted by use of a 300 mL linear pH gradient going from 0.01 M acetic acid, pH 3.5 to 0.01 M phosphate buffer, pH 8.3. Subsequently, a 200 mL salt gradient was applied (0.01 M phosphate buffer pH 8.0 to 0.01 M phosphate buffer pH 8.0 containing 0.3 M sodium chloride). Fractions of 10 mL were collected and the elution profile monitored by $UV_{280\ nm}$ absorption. Protein containing fractions from the two gradient elutions were pooled into 2 separate protein pools (protein 1 and protein 2, respectively), and freeze-dried.

The resulting protein product showed little or no discolouration. In comparison with other commercially available native plant protein products there was a particularly notable difference in colouration when the two products were suspended in water, i.e. the product according to the present invention exhibited only a small degree of discolouration when suspended in water and the commercial product showed a very significant degree of discolouration when suspended in water.

The product according to the present invention was furthermore odourless and had excellent functional characterics.

Example 5 - *Production of potato protein from potato fruit juice in laboratory scale*

0.300 L fresh fruit juice resulting from commercial potato starch production was mixed with citric acid to a final concentration of 0.100 M. The pH in the solution was 3.4. Precipitates were removed by centrifugation (3400 *g* for 10 min at 4°C). The precipitate was washed twice with 0.03 and 0.02 L milli-Q water, respectively, followed by centrifugation followed by freeze-drying. All three supernatants were pooled (0.360 L). An aliquot of 0.100 L of the supernatant was applied onto a 0.02 L cation exchange column (SP Sepharose FF, XK 16/20) regenerated by 0.02 M phosphate buffer pH 8.3 supplemented with 1 M NaCl and equilibrated with 0.02 M acetate buffer pH 3.0. After applying the sample onto the column unbound material was flushed out of the column using 0.01 M acetic acid pH 3.5. Proteins were eluted by use of a 300 mL linear pH gradient going from 0.01 M acetic acid pH 3.5 to 0.01 M phosphate buffer pH 8.3. Subsequently, a 200 mL salt gradient was applied (0.01 M phosphate buffer pH 8.0 to 0.01 M phosphate buffer pH 8.0 containing 0.3 M sodium chloride). Fractions of 10 mL were collected and the elution profile was monitored by $UV_{280\ nm}$ absorption. Protein containing fractions from the two gradient elutions were pooled into 2 separate protein pools (protein 1 and protein 2, respectively), and freeze-dried.

Table 5 shows the protein yield following addition of citric acid and pH adjustment and chromatography of fresh potato juice. Total yield (% w/w) of fresh fruit juice from industrial potato starch production is shown together with the protein concentrations (%) of each fraction. Finally the protein yield (%w/w) of the potato juice was calculated. Protein concentration is determined by $UV_{280\ nm}$ spectrophotometry using Lambert-Beers law and $E_{1cm}^{1\%} = 10$.

Table 5, Protein yield following addition of citric acid and pH adjustment and chromatography of fresh potato juice

|  | Total yield % w/w of fruit juice | Protein concentration % | Protein yield % w/w of fruit juice |
|---|---|---|---|
| Precipitate | 0.91 | 50 | 0.46 |
| Protein 1 | 0.35 | 69 | 0.24 |
| Protein 2 | 1.39 | 12 | 0.16 |

The characteristics of this potato protein product were similar to the potato protein product in Example 4.

Example 6 - *Production of potato protein from potato fruit juice in pilot scale*

100 L fresh fruit juice after commercial potato starch production was added 40% citric acid to a final concentration of 0.010 M and the pH was adjusted to 3.5 with sulphuric acid. Precipitates were removed by frame filtering and the filtrate was applied onto a 10 L cation exchanger (SP Sepharose Big Beads; BPG300/100) regenerated by 1 M sodium hydroxide and equilibrated with ion-exchanged water. After applying the sample onto the column unbound material was flushed out of the column by use of 0.010 M acetic acid pH 3.5. Proteins were eluted by use of 0.020 M phosphate buffer pH 8.0 followed by 0.020 M sodium hydroxide. The elution profile was monitored by $UV_{280\ nm}$ absorption (see Figure 8) and the protein fractions were pooled and spray-dried. The second peak comprised basic/alkaline proteins/peptides.

Table 6 shows protein yield after pilot scale potato protein production using initial addition of citric acid and pH adjustment of fresh potato fruit juice. Total yield (% w/w) of fresh fruit juice from industrial potato starch production is shown together with the protein concentrations (%) of each fraction. Finally, the protein yield (%w/w) of the potato juice was calculated. Protein concentration was determined by $UV_{280\ nm}$ spectrophotometry using Lambert-Beers law and $E_{1cm}^{1\%} = 10$.

Table 6, Protein yield after pilot scale potato protein production using initial addition of citric acid and pH adjustment of fresh potato fruit juice.

|  | Total yield % w/w of fruit juice | Protein concentration % | Protein yield % w/w of fruit juice |
|---|---|---|---|
| Protein 1 | 0.41 | 70 | 0.29 |
| Protein 2 | 0.36 | 61 | 0.22 |

The characteristics of this potato protein product were similar to the potato protein product in Example 4.

Example 7 - *Production of potato protein from potato pulp in laboratory scale*

250 g fresh potato pulp was mixed with 1000 mL 0.100 M citric acid. After mixing and a holding period of 15 min the samples were centrifuged at 10000 *g* for 15 min at 4°C. The pellet was washed twice with 400 mL milli-Q water followed by centrifugation. All three supernatants containing the proteins were pooled and applied onto a cation exchanger (SP Sepharose FF; XK 16/10) regenerated by 0.020 M phosphate buffer pH 8.3 added 1 M NaCl and equilibrated with 0.02 M acetate buffer pH 3.0. After applying the sample onto the column unbound material was flushed out of the column using 0.01 M acetic acid pH 3.5. Proteins were eluted by use of a 300 mL linear pH gradient (0.01 M acetic acid pH 3.5 to 0.01 M phosphate buffer pH 8.3). Subsequently, a 200 mL salt gradient was applied going from 0.01 M phosphate buffer pH 8.0 to 0.01 M phosphate buffer pH 8.0 containing 0.3 M sodium chloride. Fractions of 10 mL were collected and the elution profile monitored by $UV_{280\ nm}$ absorption. Protein containing fractions from the two gradient elutions were pooled into 3 separate protein pools (protein 1 from the pH gradient and protein 2 and protein 3 from the salt gradient, respectively), and freeze-dried.

Table 7 shows protein yield. Total yield (% w/w) of freeze-dried potato pulp from industrial potato starch production is shown together with the protein concentrations (%) of each fraction. Finally the protein yield (%w/w) of the potato pulp dry matter was calculated. Protein concentration was determined by the Kjeldahl method.

Table 7 Total protein yield (% w/w) of freeze-dried potato pulp from industrial potato starch production and the protein concentrations (%) of each fraction

|  | Total yield % w/w of dry potato pulp | Protein concentration % | Protein yield % w/w of dry potato pulp |
|---|---|---|---|
| Protein 1 | 0.76 | 90.0 | 0.68 |
| Protein 2 | 6.36 | 9.2 | 0.59 |
| Protein 3 | 16.12 | 6.0 | 0.97 |

The results show that 2.24% of the potato pulp dry-matter consists of protein that could be extracted with 0.100 M citric acid and purified by cation-exchange chromatography. The relatively low protein content in protein 1 and protein 2 was due to the elution procedure using a final gradient going from 0.01 M phosphate buffer pH 8.0 to 0.01 M phosphate buffer pH 8.0 containing 0.3 M sodium chloride. This resulted in high concentration of sodium chloride in the protein isolates. This can be avoided by changing the final gradient so it goes from 0.01 M phosphate buffer pH 8.0 to 0.020 M sodium hydroxide as shown in Example 6.

The "Protein 1" fraction comprised primarily neutral potato protein, whereas the "protein 2" and "protein 3" fractions comprised primarily basic proteins. These proteins are discarded with the pulp under normal potato processing conditions.

The characteristics of these potato protein products were similar to the potato protein product in Example 4. The basic potato proteins furthermore potentially have various industrial applications as well as pharmaceutical applications.

Example 8 - *Production of insoluble fibres from fresh potato in laboratory scale*

Production of insoluble potato fibres (low pH):

500 g fresh potato was crushed in a kitchen blender with 500 mL 0.100 M citric acid. The homogenate was sieved through a 0.5 mm sieve and the pulp fraction washed twice with water and filtered through a 0.5 mm sieve. The pulp was resuspended in 0.010 M citric acid, pH 3.5, and sieved once more. After sieving (0.5 mm) the pulp fraction was washed twice with water and with intermediate filtering. Finally the pulp fraction was freeze-dried.

Production of insoluble potato fibres (neutral pH):

500 g potato was crushed and washed as described in the previous example. After washing with 10 mM citrate pH 3.5, the pulp fraction was redissolved in 100 mL milli-Q water and the pH was adjusted to 5.5 with 0.2 M sodium hydroxide. The suspension was then filtered and washed twice with water and dried as in the previous example.

Both the low pH and the neutral pH experiments resulted in a potato fibre yield comprising insoluble potato fibres equal to 3.6% of the fresh potato starting material.

The resulting fibre products showed little or no discolouration. In comparison with other commercially available insoluble plant fibre products there was a particularly notable difference in colouration when the two products were suspended in water, i.e. the product according to the present invention exhibited only a small degree of discolouration when suspended in water and the commercial product showed a very significant degree of discolouration when suspended in water.

The product according to the present invention is furthermore odourless and has excellent functional characteristics.

Example 9 - *Extracting protein from potato pulp in laboratory scale*

3 x 250 g fresh potato pulp was mixed with 1000 mL milli-Q water, 0.010 M citric acid or 0.100 M citric acid, respectively. After mixing and a holding period of 15 min the samples were centrifuged at 10000 g for 15 min at 4°C. The pellets were then washed twice with 400 mL milli-Q water followed by centrifugation. The final washed pulp fractions were freeze-dried and protein contents were estimated by Kjeldahl analysis.

Table 8 shows protein content in freeze-dried pulp fractions after extraction with different concentrations of citric acid. The citric acid washed pulp fractions were compared with native potato pulp and pulp washed with milli-Q water. The average pH values of the supernatants after pulp wash and centrifugation are also shown in the table along with the standard deviation of the pH values of the different washes. The Student's t test shows that pulp washing procedures that are not connected by the same letter are significantly different (Prob. > 0.05).

Table 8, Protein content in freeze-dried pulp fractions after extraction with different concentrations of citric acid.

| Pulp washing procedure | pH of supernatants | Student's t test level | Protein content (%) |
|---|---|---|---|
| Non | - | A | 7.5 |
| Milli-Q | 4.8 ± 0.3 | B | 6.3 |
| 0.010 M Citric acid | 4.1 ± 0.4 | B C | 5.5 |
| 0.100 M Citric acid | 2.7 ± 0.2 | C | 5.1 |

The results show that washing of the pulp under conditions of low pH and chelating agent could remove some of the proteins that were present in the industrial potato pulp. It also shows that concentration of chelating agent and pH has an impact on how much protein was removed from the pulp fraction probably due to swelling of the pectin structure in the cell wall fraction of the pulp.

Example 10 - *Production of insoluble fibres from potato pulp in laboratory scale*

100 g industrial produced potato pulp was mixed with 100 mL 0.010 M citric acid or 0,100 M citric acid followed by centrifugation (10000 *g*, 10 min, 4°C). The pellet was washed twice with 100 mL milli-Q water with intermediate centrifugation. The washed pellets were thereafter frozen and freeze-dried. The test was run in triplicates and dry matter content (DM) was compared with native potato pulp.

Table 9 shows the yield of insoluble potato fibres after wash with 0.0100 M or 0.100 M citric acid. Dry matter is determined by lyophilisation and the yield after citric acid washes are compared to native potato pulp.

Table 9, Yield of insoluble potato fibres after wash with 0.0100 M or 0.100 M citric acid.

| Washing procedure | DM by lyophilisation (%) | Yield (%) | Loss (%) |
|---|---|---|---|
| Native pulp | 12.24 ± 0.02 | 100.0 | 0.0 |
| 0.010 M citric acid | 10.24 ± 0.05 | 83.7 | 16.3 |
| 0.100 M citric acid | 10.11 ± 0.07 | 82.6 | 17.4 |

The results in Table 9 show that 16.3% of the pulp dry matter was removed by wash/extraction with 0.100 M citric acid compared to 17.4% decrease of dry matter (DM) when the pulp fraction was washed with 0.100 M citric acid. Loss is due to washing-put of compounds like residual starch, proteins, glycoalkaloides, chlorogenic acid and various ions as e.g. potassium.

The result of this pulp washing procedure is a refined fibre product with good functional characteristics.

Example 11 - *Production of insoluble fibres from potato pulp in pilot scale*

50 kg fresh potato pulp was added citric acid to a final concentration of 0.100 M. The fraction was then washed by resuspension three times in 50 L fresh deionized water with intermediate filtration using a 0.5 mm sieve. The pulp fraction was thereafter frozen and freeze-dried.

Example 12 - *Production of insoluble fibres from potato pulp in industrial scale*

Fresh potato pulp was collected immediately after industrial potato starch production and mixed with 40% citric acid to a final pH of 3.5. The pulp was thereafter passed through a series of three centric-sieves for removal of the solvent fraction. After the first sieving part, the citric acid containing water was recirculated in the piping system for reuse of the citric acid and for increasing the pumping capacity of the pulp in the pipes. Remnants of citric acid as well as other dissolved compounds from the pulp fraction were washed out by water, which was applied into the pipeline after both the first and the second centric-sieve. After the final sieving the washed pulp fraction was passed through a decanter for further removal of water and water solubilised constituents. The pulp fraction was thereafter dried by spin-flash-drying.

Example 13 - *Fractionation of insoluble potato fibres (acidic filtration)*

Fresh pulp from industrial potato starch production was mixed with deionized water (1:1) and citric acid to a final concentration of 0.01 to 0.100 M and the pH was adjusted to 3.5 with sulphuric or phosphoric acid. The acidic pulp suspension was ground e.g. in a Fryma grinder Type D90 SL (Handing Aps, Vassingerød, Denmark). The ground pulp fraction was thereafter sieved through a 500 $\mu$m sieve. The filter cake was resuspended in deionized water (1:1) and the pH was neutralised e.g. by sodium hydroxide. The neutral pulp suspension was once more sieved through a 500 $\mu$m sieve and the filter cake was washed with deionized water on the filter. The filter cake containing lignin enriched potato fibres was collected. The filtrate was passed through a 40 to 100 $\mu$m sieve to collect cellulose enriched potato fibres.

Example 14 - *Fractionation of insoluble potato fibres (neutral filtration)*

Fresh pulp from industrial potato starch production was added deionized water (1:1) and citric acid to a final concentration of 0.01 to 0.100 M and the pH was adjusted to 3.5 with sulphuric or phosphoric acid. The acidic pulp suspension was ground e.g. in a Fryma grinder Type D90 SL (Handing Aps, Vassingerød, Denmark) prior to pH neutralisation by use of e.g. sodium hydroxide. The ground neutral pulp fraction was thereafter sieved through a 500 $\mu$m sieve. The filter cake was washed with deionized water on the filter. The filter cake containing lignin enriched potato fibres was collected. The filtrate was passed through a 40 to 100 $\mu$m sieve to collect cellulose enriched potato fibres.

Example 15 - *Production of soluble fibres from fresh potato in laboratory scale*

500 g fresh potato was crushed in a kitchen blender with 500 mL 0.100 M citric acid. The homogenate was sieved through a 0.5 mm sieve and the pulp fraction was washed twice with water and filtered through a 0.5 mm sieve. The insoluble starch fraction was removed from the filtrate by decanting. The pH of the potato juice was adjusted to 3.5 and applied onto a 0.02 L cation exchange column (SP Sepharose FF, XK 16/20) regenerated by 0.02 M phosphate buffer pH 8.3 added 1 M NaCl and equilibrated with 0.02 M acetate buffer pH 3.0. After applying the sample onto the column unbound material was flushed out of the column using 0.01 M acetic acid pH 3.5. The run-trough fraction was concentrated 10 times by rota-evaporation. The concentrate was mixed with iso-propanol to a final concentration of 55% v/v. The suspension was left over night for sedimentation at 4°C, followed by decantation of the upper phase. The sediment was thereafter centrifuged (10000 *g,* 10 min, 4°C) the pellet was washed with 96% ethanol followed by re-centrifugation and air-drying.

The resulting fibre product shows little or no discolouration. In comparison with other commercially available soluble plant fibre products there was a particularly notable difference in colouration when the two products were suspended in water, i.e. the product according to the present invention exhibited only a small degree of discolouration when suspended in water and the commercial product shows a very significant degree of discolouration when suspended in water.

The product according to the present invention is furthermore odourless and has excellent functional characteristics.

Example 16 - *Production of soluble fibres from fresh potato juice in laboratory scale*

0.300 L fresh fruit juice after commercial potato starch production was added citric acid to a final concentration of 0.100 M. The pH in the solution was 3.4. Precipitates were removed by centrifugation (3400 *g* for 10 min at 4°C). The precipitate was washed twice with 0.03 and 0.02 L milli-Q water, respectively, followed by centrifugation followed by freeze-drying. All three supernatants were pooled (0.360 L). An aliquot of 0.100 L of the supernatant was applied onto a 0.02 L cation exchange column (SP Sepharose FF, XK 16/20) regenerated by 0.02 M phosphate buffer pH 8.3 added 1 M NaCl and equilibrated with 0.02 M acetate buffer pH 3.0. After applying the sample onto the column unbound material was flushed out of the column using 0.01 M acetic acid pH 3.5. The run-trough fraction was concentrated 10 times by rota-evaporation. The concentrate was mixed with *iso*-propanol to a final concentration of 55% v/v. The suspension was left over night for sedimentation at 4°C, followed by decanting of the upper phase. The sediment was thereafter centrifuged (10000 *g,* 10 min, 4°C); the pellet was washed with 96% ethanol followed by re-centrifugation and air-drying.

The functional characteristics of this product are similar to the fibre product obtained in example 15.

Example 17 - *Production of soluble fibres from fresh potato juice in pilot scale*

700 L fresh potato juice was added citric acid to a concentration of 0.010 M and the pH was adjusted to 3.5 by sulphuric acid. The juice was passed through a cation exchange column for protein isolation as described in the previous example. The run through fraction was collected and concentrated 35 times by ultrafiltration (10 kDa cut-off). The concentrate was mixed with 96% ethanol to a final concentration of 65%. The suspension was left over night for sedimentation at 4°C, followed by decanting of the upper phase. The sediment was thereafter centrifuged (10000 *g*, 10 min, 4°C) and the pellet was washed with 96% ethanol followed by recentrifugation and air-drying.

The functional characteristics of this product were similar to the fibre product obtained in example 15.

Example 18 - *Production of starch from fresh potato in laboratory scale*

500 g fresh potato was crushed in a kitchen blender with 500 mL 0.100 M citric acid. The homogenate was sieved through a 0.5 mm sieve and the pulp fraction was washed twice with water and filtered through a 0.5 mm sieve. The pulp was resuspended in 0.010 M citric acid pH 3.5 and sieved once more. The soluble filtrate fractions were pooled and centrifuged at 4500 *g* for 5 min The pellet containing the starch fraction was resuspended in water and the pH was adjusted to 5.5 with sodium hydroxide and insoluble starch granules were removed by vacuum filtering. Protein remnants in the starch fraction were dissolved by continuous washing with water on the filter.

The starch granules obtained from this procedure are colourless and odourless.

Example 19 - *Production of potato protein from potato fruit juice by precipitation in laboratory scale*

Industrial produced potato fruit juice was added citric acid to a final concentration of 20 mM and pH was adjusted to 3.5 with 8 M sulphuric acid. Precipitates in the acidified fruit juice were allowed to sediment in a storage tank at 4 - 10°C. The sediment having a dry matter content of 6.5 % was collected and divided into two fractions. The first fraction (named Native Patatin) was subjected to centrifugation using 2500 *g* for 5 min at 4°C, whereas the other fraction (named pH Adjusted Patatin) was subjected to pH adjustment prior to centrifugation at similar conditions. The pH adjustment was preformed as follows. The sediment was added 6 M sodium hydroxide until a pH of 11 and the sediment was dissolved. Immediately thereafter the pH was lowered by addition of 6 M HCl to a final pH of 4.5. After centrifugation the supernatants were collected. The protein in the supernatants was diluted 30 times with 50 mM sodium hydroxide and the protein concentration of the supernatant was estimated using UV spectrophotometry at 280 nm, Lambert-Beers Law and an extinction coefficient $\varepsilon_{280nm}$ of 1 L (g cm)$^{-1}$. Results are given in Table 10.

Table 10 Protein concentration in supernatants after precipitation of patatin from potato fruit juice. Native patatin is the patatin precipitate collected after addition of citric acid (20 mM) and pH adjustment to 3.5 with sulphuric acid. Alkaline solubilisation of the native patatin followed immediately by acidic precipitation (pH 4.5) results in the pH adjusted native patatin. The patatin samples are collected by centrifugation (2500 g for 5 min.). Supernatants are diluted in 50 mM sodium hydroxide prior to UV spectrometric determination of the protein concentration.

| | Protein concentration in supernatant | Relative protein concentration in supernatant | DM of precipitate | Relative DM of precipitate |
|---|---|---|---|---|
| | g/L | % | 9 | % |
| Native Patatin | 34 | 100 | 0.93 | 100 |
| pH Adjusted Patatin | 19 | 57 | 0.97 | 104 |

The results show that precipitation and sedimentation of the patatin proteins in the potato fruit juice can be enhanced by the developed procedure. 43 % of the protein in the Native Patatin sample that was in solution after centrifugation at 2500 *g* for 5 min could be precipitated at the same centrifugal conditions after alkaline solubilisation followed by acidic precipitation.

**Claims**

1. A process for inhibiting browning of plant material, the method comprising the steps of:

- providing a plant material;
- disrupting the plant material;
- adding a chelating agent to the disrupted plant material to a concentration of 1-200 mM in the liquid fraction;

- adjusting the pH of the plant material to a value of from about 2.0 to about 4.5;
- contacting the plant material with a cation-exchange chromatography resin to separate a binding fraction from a non-binding fraction;
- contacting the cation-exchange chromatography resin with an eluent solution to elute a soluble product from the binding fraction from the cation-exchange chromatography resin.

2. A process for the manufacture of a product from a plant material according to claim 1, wherein the product is an insoluble product and the process prior to the step of contacting the plant material with a cation-exchange chromatography resin further comprises the steps of:

- separating the plant material into a liquid fraction and a solid fraction;
- isolating an insoluble component from the solid fraction.

3. A process for the manufacture of a product from a plant material according to claim 2, wherein the product is a protein product and the process further comprises the steps of:

- sedimenting a protein component from the liquid fraction;
- isolating the sedimented protein component.

4. A process according to any one of claims 1 to 3, wherein the pH of the plant material is further adjusted to a value from about 3.5 to about 5.5 prior to contacting the plant material with the cation-exchange chromatography resin.

5. A process according to any one of claims 2 to 4, wherein the step of isolating said insoluble component comprises:

- adding water to the solid fraction to obtain a suspension of insoluble components;
- adjusting the pH to a value of 5.8 or higher;
- screening the suspension to provide a fraction comprising coarse grained insoluble components of a size larger than about 500 $\mu$m and a fraction comprising fine grained insoluble components of a size smaller than about 500 $\mu$m;
- isolating the insoluble product from the coarse grained insoluble components.

6. A process according to any one of claim 2 to 4, wherein the step of isolating said insoluble component comprises:

- adding water to the solid fraction to obtain a suspension of insoluble components;
- adjusting the pH to a value of 5.8 or higher;
- screening the suspension to provide a fraction comprising coarse grained insoluble components of a size larger than about 500 $\mu$m and a fraction comprising fine grained insoluble components of a size smaller than about 500 $\mu$m;
- isolating the insoluble product from the fine grained insoluble components.

7. A process according to any one of claims 3 to 6 further comprising the step of separating the liquid fraction comprising the sedimented protein into an upper phase and a lower phase, and isolating the sedimented protein component from the lower phase.

8. A process according to claim 3 or 7 further comprising the step of increasing the pH to 9-10 or above followed by an adjustment of the pH to about 2.0 to 6.0.

9. A process according to any one of claims 3 or 7 or 8, wherein the protein component is isolated by filtration or centrifugation.

10. The process according to any one of claims 1 to 9, wherein the chelating agent is added to the disrupted plant material to a concentration of 10-50 mM in the liquid fraction.

11. The process according to any one of claims 1 to 10, wherein pH of the plant material is adjusted to a value of from about 3 to about 4.

12. The process according to any one of claims 1 to 11, wherein the chelating agent is selected from the list consisting of: citric acid, citrate, oxalic acid, oxalate, succinic acid, succinate, phosphoric acid, phosphate, lactic acid, lactate, malic acid, malate, malonic acid, malonate, tartaric acid, tartrate or any mixture thereof.

13. The process according to any one of claims 1 to 12, wherein the chelating agent is added to the plant material during or after the disruption step.

14. The process according to any one of claims 1 to 13, wherein the chelating agent is added to the plant material after the disruption step.

15. The process according to any one of claims 1 to 14, wherein the plant material is derived from a plant selected from pulses, yams, manioc, sweet potato, cereals; fruits, seeds, rhizomes or tubers of plants; red berries; rice, wheat, corn, pea, manioc, cassava, bamboo, tapioca, potatoes, sugar cane, sugar beet, tomato, grape, litchi, loquat, plantain, persimmon, eggplant, guava, uchuva (ground cherry), chili pepper, blackcurrant, redcurrant, cranberry, blueberry, gooseberry, strawberry, blackberry, raspberry, boysenberry, tomato, pomegranate, avocado, kiwifruit, grape, banana, squash, pumpkin, gourd, cucumber, melon, cantaloupe, watermelon, orange, lemon, lime, grapefruit, apple, peach, cherry, green bean, sunflower seed, hazel nut, walnut, peanut, almond, pistachio nut, pecan nut, barley, oat, Jerusalem artichoke, chicory, parsnip; and mushrooms.

**Patentansprüche**

1. Verfahren zum Hemmen von Braunwerden von Pflanzenmaterial, wobei das Verfahren die Schritte umfasst:

    - Bereitstellen eines Pflanzenmaterials;
    - Aufbrechen des Pflanzenmaterials;
    - Zugeben eines Chelatbildners zu dem aufgebrochenen Pflanzenmaterial auf eine Konzentration von 1-200 mM in der flüssigen Fraktion;
    - Einstellen des pH-Werts des Pflanzenmaterials auf einen Wert von etwa 2,0 bis etwa 4,5;
    - Inkontaktbringen des Pflanzenmaterials mit einem Kationenaustausch-Chromatographieharz, um eine bindende Fraktion von einer nichtbindenden Fraktion zu trennen;
    - Inkontaktbringen des Kationenaustausch-Chromatographieharzes mit einer Eluenslösung, um ein lösliches Produkt von der bindenden Fraktion von dem Kationenaustausch-Chromatographieharz zu eluieren.

2. Verfahren zum Herstellen eines Produkts aus einem Pflanzenmaterial gemäß Anspruch 1, wobei das Produkt ein unlösliches Produkt ist und das Verfahren vor dem Schritt des Inkontaktbringens des Pflanzenmaterials mit einem Kationenaustausch-Chromatographieharz ferner die Schritte umfasst:

    - Auftrennen des Pflanzenmaterials in eine flüssige Fraktion und eine feste Fraktion;
    - Isolieren einer unlöslichen Komponente von der festen Fraktion.

3. Verfahren zum Herstellen eines Produkts aus einem Pflanzenmaterial gemäß Anspruch 2, wobei das Produkt ein Proteinprodukt ist und das Verfahren ferner die Schritte umfasst:

    - Sedimentieren einer Proteinkomponente aus der flüssigen Fraktion;
    - Isolieren der sedimentierten Proteinkomponente.

4. Verfahren gemäß einem der Ansprüche 1 bis 3, wobei ferner vor dem Inkontaktbringen des Pflanzenmaterials mit einem Kationenaustausch-Chromatographieharz der pH-Wert des Pflanzenmaterials auf einen Wert von etwa 3,5 bis etwa 5,5 eingestellt wird.

5. Verfahren gemäß einem der Ansprüche 2 bis 4, wobei der Schritt des Isolierens der unlöslichen Komponente umfasst:

    - Zugeben von Wasser zu der festen Fraktion, um eine Suspension von unlöslichen Komponenten zu erhalten;
    - Einstellen des pH-Werts auf einen Wert von 5,8 oder höher;
    - Sieben der Suspension, um eine Fraktion, die grobe, körnige, unlösliche Komponenten mit einer Größe von größer als etwa 500 $\mu$m umfasst, und eine Fraktion, die feine, körnige, unlösliche Komponenten mit einer Größe von kleiner als etwa 500 $\mu$m umfasst, bereitzustellen;
    - Isolieren des unlöslichen Produkts aus den groben, körnigen, unlöslichen Komponenten.

**6.** Verfahren gemäß einem der Ansprüche 2 bis 4, wobei der Schritt des Isolierens der unlöslichen Komponente umfasst:

- Zugeben von Wasser zu der festen Fraktion, um eine Suspension von unlöslichen Komponenten zu erhalten;
- Einstellen des pH-Werts auf einen Wert von 5,8 oder höher;
- Sieben der Suspension, um eine Fraktion, die grobe, körnige, unlösliche Komponenten mit einer Größe von größer als etwa 500 $\mu$m umfasst, und eine Fraktion, die feine, körnige, unlösliche Komponenten mit einer Größe von kleiner als etwa 500 $\mu$m umfasst, bereitzustellen;
- Isolieren des unlöslichen Produkts aus den feinen, körnigen, unlöslichen Komponenten.

**7.** Verfahren gemäß einem der Ansprüche 3 bis 6, ferner umfassend den Schritt des Auftrennens der flüssigen Fraktion, die das sedimentierte Protein umfasst, in eine obere Phase und eine untere Phase, und Isolieren der sedimentierten Proteinkomponente aus der unteren Phase.

**8.** Verfahren gemäß Anspruch 3 oder 7, ferner umfassend den Schritt des Erhöhens des pH-Werts auf 9-10 oder darüber, gefolgt von Einstellen des pH-Werts auf etwa 2,0 bis 6,0.

**9.** Verfahren gemäß einem der Ansprüche 3 oder 7 oder 8, wobei die Proteinkomponente durch Filtration oder Zentrifugation isoliert wird.

**10.** Verfahren gemäß einem der Ansprüche 1 bis 9, wobei der Chelatbildner auf eine Konzentration von 10-50 mM in der flüssigen Fraktion zu dem aufgebrochenen Pflanzenmaterial zugegeben wird.

**11.** Verfahren gemäß einem der Ansprüche 1 bis 10, wobei der pH-Wert des Pflanzenmaterials auf einen Wert von etwa 3 bis etwa 4 eingestellt wird.

**12.** Verfahren gemäß einem der Ansprüche 1 bis 11, wobei der Chelatbildner ausgewählt ist aus der Liste bestehend aus: Citronensäure, Citrat, Oxalsäure, Oxalat, Bernsteinsäure, Succinat, Phosphorsäure, Phosphat, Milchsäure, Lactat, Apfelsäure, Malat, Malonsäure, Malonat, Weinsäure, Tartrat und einem beliebigen Gemisch davon.

**13.** Verfahren gemäß einem der Ansprüche 1 bis 12, wobei der Chelatbildner während oder nach dem Schritt des Aufbrechens zu dem Pflanzenmaterial zugegeben wird.

**14.** Verfahren gemäß einem der Ansprüche 1 bis 13, wobei der Chelatbildner nach dem Schritt des Aufbrechens zu dem Pflanzenmaterial zugegeben wird.

**15.** Verfahren gemäß einem der Ansprüche 1 bis 14, wobei das Pflanzenmaterial abgeleitet ist aus einer Pflanze ausgewählt aus Hülsenfrüchten, Yamwurzeln, Maniok, Süßkartoffel, Getreide; Früchten, Samen, Rhizomen oder Knollen von Pflanzen; roten Beeren; Reis, Weizen, Mais, Erbsen, Maniok, Kassava, Bambus, Tapioka, Kartoffeln, Zuckerrohr, Zuckerrübe, Tomaten, Trauben, Litschi, Mispel, Wegerich, Persimone, Aubergine, Guave, Uchuva (gemahlene Kirsche), Chilipfeffer, schwarzer Johannisbeere, roter Johannisbeere, Cranberry, Heidelbeere, Stachelbeere, Erdbeere, Brombeere, Himbeere, Boysenbeere, Tomate, Granatapfel, Avocado, Kiwifrucht, Traube, Banane, Squash, Kürbis, Flaschenkürbis, Gurke, Melone, Kantalupe, Wassermelone, Orange, Zitrone, Limette, Grapefruit, Apfel, Pfirsich, Kirsche, grüne Bohnen, Sonnenblumensamen, Haselnuss, Walnuss, Erdnuss, Mandel, Pistazie, Pekannuss, Gerste, Hafer, Jerusalem-Artischocke, Chicoree, Pastinake; und Pilzen.

**Revendications**

**1.** Procédé d'inhibition du brunissement d'un matériau végétal, la méthode comprenant les étapes :

- de fourniture d'un matériau végétal ;
- de désintégration du matériau végétal ;
- d'addition d'un agent chélateur au matériau végétal désintégré jusqu'à une concentration de 1-200 mM dans la fraction liquide ;
- d'ajustement du pH du matériau végétal jusqu'à une valeur allant d'environ 2,0 jusqu'à environ 4,5 ;
- de mise en contact du matériau végétal avec une résine de chromatographie d'échange de cations afin de séparer une fraction se fixant d'une fraction ne se fixant pas ;
- de mise en contact de la résine de chromatographie d'échange de cations avec une solution d'éluant afin d'éluer un produit soluble à partir de la fraction se fixant, à partir de la résine de chromatographie d'échange de cations.

**2.** Procédé de préparation d'un produit à partir d'un matériau végétal selon la revendication 1, dans lequel le produit est un produit insoluble et le procédé, préalablement à l'étape de mise en contact du matériau végétal avec une résine de chromatographie d'échange de cations, comprend en outre les étapes :

- de séparation du matériau végétal en une fraction liquide et une fraction solide ;
- d'isolement d'un composant insoluble à partir de la fraction solide.

**3.** Procédé de préparation d'un produit à partir d'un matériau végétal selon la revendication 2, dans lequel le produit est un produit de protéine et le procédé comprend en outre les étapes :

- de sédimentation d'un composant de protéine à partir de la fraction liquide ;
- d'isolement du composant de protéine sédimenté.

**4.** Procédé selon l'une quelconque des revendications 1 à 3, dans lequel le pH du matériau végétal est en outre ajusté jusqu'à une valeur allant d'environ 3,5 à environ 5,5 préalablement à la mise en contact du matériau végétal avec la résine de chromatographie d'échange de cations.

**5.** Procédé selon l'une quelconque des revendications 2 à 4, dans lequel l'étape d'isolement dudit composant insoluble comprend :

- l'addition d'eau à la fraction solide afin d'obtenir une suspension de composants insolubles ;
- l'ajustement du pH à une valeur de 5,8 ou plus ;
- le tamisage de la suspension afin d'obtenir une fraction comprenant des composants insolubles à gros grains d'une taille supérieure à environ 500 $\mu$m et une fraction comprenant des composants insolubles à grains fins d'une taille inférieure à environ 500 $\mu$m ;
- l'isolement du produit insoluble à partir des composants insolubles à gros grains.

**6.** Procédé selon l'une quelconque des revendications 2 à 4, dans lequel l'étape d'isolement dudit composant insoluble comprend :

- l'addition d'eau à la fraction solide afin d'obtenir une suspension de composants insolubles ;
- l'ajustement du pH à une valeur de 5,8 ou plus ;
- le tamisage de la suspension afin d'obtenir une fraction comprenant des composants insolubles à gros grains d'une taille supérieure à environ 500 $\mu$m et une fraction comprenant des composants insolubles à grains fins d'une taille inférieure à environ 500 $\mu$m ;
- l'isolement du produit insoluble à partir des composants insolubles à grains fins.

**7.** Procédé selon l'une quelconque des revendications 3 à 6, comprenant en outre l'étape de séparation de la fraction liquide comprenant la protéine sédimentée en une phase supérieure et une phase inférieure, et l'isolement du composant de protéine sédimenté à partir de la phase inférieure.

**8.** Procédé selon la revendication 3 ou 7, comprenant en outre l'étape d'augmentation du pH jusqu'à 9-10 ou plus, suivie d'un ajustement du pH jusqu'à d'environ 2,0 à 6,0.

**9.** Procédé selon l'une quelconque des revendications 3 ou 7 ou 8, dans lequel le composant de protéine est isolé par filtration ou centrifugation.

**10.** Procédé selon l'une quelconque des revendications 1 à 9, dans lequel l'agent chélateur est ajouté au matériau végétal désintégré jusqu'à une concentration de 10-50 mM dans la fraction liquide.

**11.** Procédé selon l'une quelconque des revendications 1 à 10, dans lequel le pH du matériau végétal est ajusté jusqu'à une valeur allant d'environ 3 à environ 4.

**12.** Procédé selon l'une quelconque des revendications 1 à 11, dans lequel l'agent chélateur est choisi dans la liste constituée par : l'acide citrique, le citrate, l'acide oxalique, l'oxalate, l'acide succinique, le succinate, l'acide phosphorique, le phosphate, l'acide lactique, le lactate, l'acide malique, le malate, l'acide malonique, le malonate, l'acide tartrique, le tartrate, ou un mélange quelconque de ceux-ci.

13. Procédé selon l'une quelconque des revendications 1 à 12, dans lequel l'agent chélateur est ajouté au matériau végétal pendant ou après l'étape de désintégration.

14. Procédé selon l'une quelconque des revendications 1 à 13, dans lequel l'agent chélateur est ajouté au matériau végétal après l'étape de désintégration.

15. Procédé selon l'une quelconque des revendications 1 à 14, dans lequel le matériau végétal est dérivé d'une plante choisie parmi les légumes secs, les ignames, le manioc, la patate douce, les céréales ; les fruits, les graines, les rhizomes ou les tubercules de plantes ; les baies rouges ; le riz, le blé, le maïs, le pois, le manioc, le bambou, le tapioca, les pommes de terre, la canne à sucre, la betterave sucrière, la tomate, le raisin, le litchi, le nèfle du Japon, la banane plantain, le kaki, l'aubergine, la goyave, le coqueret du Pérou (cerise de terre), le piment chili, le cassis, la groseille, la canneberge, la myrtille, la groseille à maquereau, la fraise, la mûre, la framboise, la mûre de Boysen, la tomate, la grenade, l'avocat, le kiwi, le raisin, la banane, la courge, le potiron, la gourde, le concombre, le melon, le cantaloup, la pastèque, l'orange, le citron, le citron vert, le pamplemousse, la pomme, la pêche, la cerise, le haricot vert, les graines de tournesol, la noisette, la noix, la cacahuète, l'amande, la pistache, la noix de Pécan, l'orge, l'avoine, le topinambour, la chicorée, le panais ; et les champignons.

## New method for production of starch, proteins, fibres and aroma

Washed pulp ← Chrushing ← Vegetable or fruit added selected type of acid

Washed pulp → pH neutralization → Insoluble fibre

Chrushing → Sieving and wash

Sieving and wash → Filtrate → Insoluble fraction

Insoluble fraction → pH neutralization → Starch

Filtrate → Sedimentation and decanting

Sedimentation and decanting → pH adjustment

pH neutralization → Centrifugation → Acidic proteins

pH adjustment → Cation exchange chromatography → pH gradient → Neutral de-protonable cationic compounds

Hydrophobic interaction chromatography → Aroma

Condensate/ permeate → Hydrophobic interaction chromatography

Cation exchange chromatography → Run Through

Run Through → Concentration → Condensate/ permeate

pH gradient → Salt gradient or alkaline pH gradient → Neutral protein

Salt gradient or alkaline pH gradient → Alkaline proteins

Concentration → Alcohol precipitation → Centrifugation/ filtration → Soluble fibres

Fig. 1

**Production of starch, proteins, fibres and aroma from fresh potato**

Washed pulp ← Crushing ← Potato added Citric acid

Washed pulp → pH neutralization → Insoluble potato fibres

Crushing → Sieving and wash

Sieving and wash → Filtrate

Filtrate → Insoluble fraction

Filtrate → Sedimentation and decanting

Sedimentation and decanting → pH adjustment

pH adjustment → Cation exchange chromatography

Insoluble fraction → pH neutralization → Centrifugation

Centrifugation → Potato starch

Centrifugation → Patatin

Potato aroma ← Hydrophobic interaction chromatography ← Condensate/permeate ← Concentration

Cation exchange chromatography → pH gradient

pH gradient → Glycoalkaloide concentrate

pH gradient → Salt gradient

Salt gradient → Neutral protein

Salt gradient → Alkaline proteins

Cation exchange chromatography → Run Through → Concentration

Concentration → Alcohol precipitation → Centrifugation/filtration → Soluble potato fibres

Fig. 2

Fig. 3

## Production of insoluble potato fibres from potato pulp (Method A)

```
┌──────────────┐      ┌──────────────────┐
│  Potato pulp │─────▶│ Addition of citric│
└──────────────┘      │  acid and mixing  │
                      └──────────────────┘
                               │
                               ▼
                      ┌──────────────────┐      ┌──────────────────┐
                      │ Sieving/filtering │─────▶│ Soluble fraction │
                      └──────────────────┘      └──────────────────┘
                               │                          ▲
                               ▼                          │
                      ┌──────────────────┐                │
                      │      Solids      │                │
                      └──────────────────┘                │
                               │                          │
                               ▼                          │
                      ┌──────────────────┐                │
                      │ Addition of water│                │
                      │    and mixing    │                │
                      └──────────────────┘                │
                               │                          │
                               ▼                          │
                      ┌──────────────────┐                │
                      │ Sieving/filtering │───────────────┤
                      └──────────────────┘                │
                               │                          │
                               ▼                          │
                      ┌──────────────────┐                │
                      │      Solids      │                │
                      └──────────────────┘                │
                               │                          │
                               ▼                          │
                      ┌──────────────────┐                │
                      │ Addition of water│                │
                      │      and pH      │                │
                      │  neutralization  │                │
                      └──────────────────┘                │
                               │                          │
                               ▼                          │
                      ┌──────────────────┐                │
                      │ Sieving/filtering │───────────────┘
                      └──────────────────┘
                               │
                               ▼
                      ┌──────────────┐      ┌──────────────┐
                      │    Solids    │─────▶│    Drying    │
                      └──────────────┘      └──────────────┘
                                                   │
                                                   ▼
                                            ┌──────────────────┐
                                            │ Insoluble potato │
                                            │      fibres      │
                                            └──────────────────┘
```

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5912034 A